# EUROPEAN PATENT SPECIFICATION

(11) **EP 4 467 521 B1**
(45) Date of publication and mention of the grant of the patent: **02.12.2026**
(21) Application number: 23884726.3
(22) Date of filing: 26.10.2023
(51) Int. Cl.: C03B 29/08, C03B 27/04, C03B 27/044, F23C 99/00, F23D 14/02, F27B 9/12, F27B 9/24, F27B 9/36

(54) **GLASS TEMPERING FURNACE AND GLASS TEMPERING METHOD**
GLASHÄRTUNGSOFEN UND GLASHÄRTUNGSVERFAHREN
FOUR DE TREMPE DE VERRE ET PROCÉDÉ DE TREMPE DE VERRE

(30) Priority: 01.11.2022 CN 202211358216; 01.11.2022 CN 202222929439 U; 04.09.2023 CN 202322399577 U
(43) Date of publication of application: 27.11.2024
(73) Proprietor: Songshan Lake Materials Laboratory, Dongguan, Guangdong 523808 (CN); Zhongke Zhuoyi Greene Tech (Dongguan) Co., Ltd., Dongguan, Guangdong 523000 (CN)
(72) Inventor: XIE, Binghan, Dongguan, Guangdong 523000 (CN); FU, Chao, Dongguan, Guangdong 523808 (CN); REN, Zhiheng, Dongguan, Guangdong 523808 (CN)
(74) Representative: Prinz & Partner mbB
(86) International application number: PCT/CN2023/126858
(87) International publication number: WO 2024/093794

(56) References cited:
- CN-A- 106 865 964
- CN-A- 110 526 561
- CN-A- 112 665 376
- CN-A- 114 605 060
- CN-A- 115 650 567
- CN-A- 115 650 567
- CN-U- 202 022 846
- CN-U- 215 403 833
- US-A1- 2004 093 904
- US-A1- 2017 334 760
- US-B1- 6 427 488

## Description

### TECHNICAL FIELD

The present application relates to the field of glass tempering, for example, a glass tempering furnace and method.

### BACKGROUND

Glass, as a transparent or translucent amorphous material, exhibits unique properties during heat transfer. Glass is a structure with short-range order and long-range disorder. Glass is transparent or translucent to visible light and infrared light. When receiving external heat, the internal of the glass generates high-frequency electromagnetic radiation. This heat transfer process is called photon conduction. At room temperature, photon conduction in transparent glass accounts for approximately 10% of the total heat transfer. As the temperature increases, the effect of photon conduction increases, and the volumetric radiation occurs inside the glass.

Ordinary transparent glass has a high emissivity and can absorb thermal radiation well. Applying a thin film having low emissivity property onto the surface of ordinary glass creates Low-E glass. The most significant feature of Low-E glass is high reflectance for far-infrared radiation, low emissivity for near-infrared radiation, and high transmittance for visible light. This means that after using Low-E glass in buildings, the visible light portion of sunlight can penetrate, providing daylighting, while most of the infrared radiation that can generate heat is blocked outside the window. Due to surface modification of Low-E glass, many problems arise during a tempering and heating process.

Compared with ordinary glass, tempered glass is considered as safety glass. Tempered glass is actually prestressed glass. To enhance the strength of glass, chemical or physical methods are typically used to create compressive stress on the surface of the glass. When subjected to an external force, the glass first offsets the surface stress, thereby increasing the load-bearing capacity and enhancing the resistance to wind pressure, temperature variations, and impact.

The tempering of glass is divided into "physical tempering" and "chemical tempering."

Physical tempering involves heating ordinary flat glass in a furnace to near its softening temperature (about 600°C), eliminating internal stress by deformation of the glass, removing the glass from the furnace, and blowing high-pressure cold air onto both sides of the glass by multiple nozzles to rapidly and uniformly cool the glass to room temperature, thus producing tempered glass.

Chemical tempering, which enhances the strength of glass by altering chemical composition of the surface of the glass, is typically tempered by using an ion exchange method. The method involves immersing silicate glass containing alkali metal ions into molten lithium (Li+) salt and making Na+ or K+ ions on the surface of the glass exchange with Li+ ions to form a Li+ ion exchange layer on the surface of the glass. Since Li+ ions have a smaller expansion coefficient than Na+ or K+ ions, the outer layer contracts less while the inner layer contracts more during cooling. As a result, upon reaching room temperature, the glass is subjected to tension in the inner layer and compression in the outer layer, similar to the effect observed in physically tempered glass.

The present application discusses the device involved in physical tempering, namely a tempering furnace.

From the perspective of heat transfer, the heating process of glass in the tempering furnace involves radiation heat transfer, convective heat transfer, and thermal conduction.

Radiation heat transfer: Radiation is ubiquitous. When a piece of cold glass enters the heating furnace section of the glass tempering furnace, various heating elements, furnace wall insulation materials, and ceramic rollers emit radiant heat to heat the glass. Waves have two forms, "absorption + penetration", for the heated object. Only when the waves are absorbed, can the object be heated. In terms of the spectrum curve of glass, due to the composition of the glass, the glass appears as "peaks and valleys" on the infrared transmission curve, rather than a straight line. Corresponding to the "valleys" is the range of wavelengths that the glass can absorb. The wavelengths that the glass can absorb are not uniform.

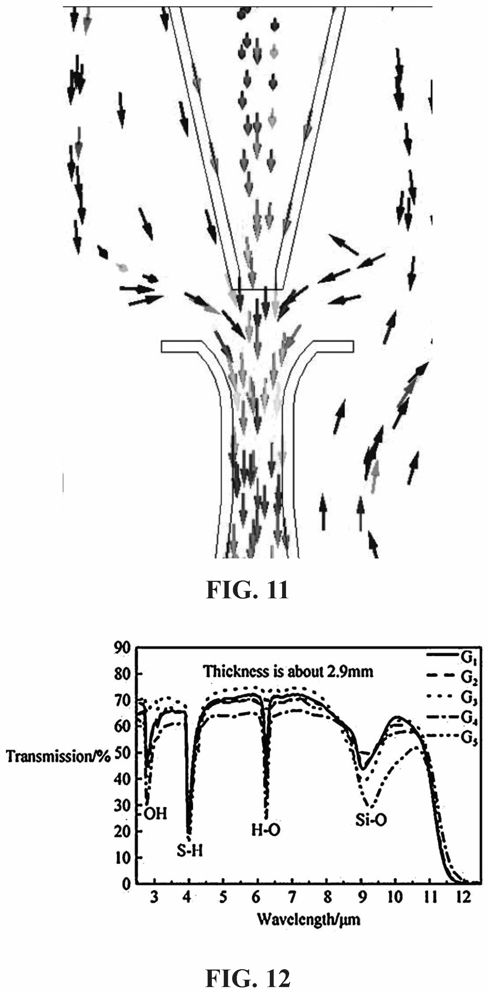

FIG. 12 shows an infrared transmission curve of a glass in an embodiment. Curves for different types of glass vary. This requires that during the heating process of glass in the tempering furnace, the wavelength of the radiated waves from the heat source should be a "broadband" wave, covering as much as possible the absorbed wavelengths corresponding to different types of glass. In fact, this also requires that the temperature of the heat source can be both high and relatively low (compared with a resistance wire).

Convective heat transfer: In the production process of tempered glass, several convective heat transfer modes exist.
1. Natural convection: When there is a temperature difference inside the furnace, air flows naturally. The cold glass enters the heating furnace section. The lower surface of the glass undergoes natural convection heating while the upper surface of the glass has an air barrier due to cold air. If there is no forced convection, natural convection heating has little effect. The natural convection effect is significant on the four edges of the block-shaped flat glass, generally resulting in "hot edges" of the glass, causing the temperature of the glass edges to be too high, and thereby affecting the optical imaging quality of the glass.
2. Forced convection with a thermal equilibrium tube: Typically, there is a thermal equilibrium tube near a heating element inside the heating furnace section. Compressed air inside the tube is heated, transformed into hot air, and then blown onto the upper and lower surfaces of the glass. The thermal equilibrium gas provides forced convective heat for the glass and also ensures uniform temperature inside the heating furnace section. However, when the glass is in a softened state at a high temperature, airflow having certain velocity and pressure creates "patterns" on the surface of the softened glass. This is a drawback of this forced convection method.
3. Forced convection as the primary heating method: Gas-fired heating furnace sections and gas cushion heating furnace sections both use forced convection as one of the primary heating methods. With the rapid expansion of the market application of Low-E glass that can be tempered, forced convection heating furnace sections using high-temperature fans or compressed air have also been developed. Forced convection heating can shorten the glass heating time, improve the production efficiency, make the temperature of the glass more uniform, and enhance the product quality.

Heat conduction: The upper surface of the glass does not come into contact with components in the furnace, and only the lower surface of the glass contacts ceramic rollers. The ceramic rollers are primarily made of quartz with the addition of auxiliary materials, resulting in a thermal expansion coefficient close to zero and a low thermal conductivity. The contact (theoretically linear contact) area between the ceramic rollers and the glass is small, so thermal conduction is not the primary mode of heat transfer throughout the entire heating process. Less than 10% of the heat absorbed by the glass in the heating furnace section comes from thermal conduction. However, when cold glass initially enters the furnace, contact between the lower surface of the cold glass and hot ceramic rollers causes the glass to warp and jitter. This should be noted.

In the related art, the heat source in a radiant-type tempering furnace in the industry that is heating glass comes from electric heating elements located on the top and bottom of the furnace. These electric heating elements are typically made of nickel-chromium resistance wires. Each electric heating element is either mounted in a metal tube to radiate heat in the form of a radiation tube or sheathed on a heat-resistant ceramic tube with which a resistance wire radiates heat into the furnace. The glass is usually placed flat on drive rollers made mainly of heat-resistant ceramics and is fed into the furnace by the rotation of the rollers. To temper large-sized flat glass, electric heating elements inside the furnace are generally arranged as densely as possible on the top and bottom of the furnace. When the glass is fed into the furnace at room temperature, it undergoes radiant heat transferred from the electric heating elements and heat conducted from the drive rollers in contact with the glass. Since the furnace temperature is generally around 700°C, the drive rollers have a high temperature, resulting in significant heat transfer to the glass through conduction. This causes the temperature of the lower surface of the glass to be higher than that of the upper surface of the glass, leading to non-uniform temperature distribution along the thickness direction of the glass and resulting in bending and warping of the edges of the glass. At this time, the gravity is concentrated in the middle of the glass, forming roller marks. Non-uniform heating also causes white spots to appear in the central part of the glass. This problem becomes even more serious when the substrate of laminated glass is tempered.

Low-E glass is formed from ordinary glass whose one side is coated. During tempering, to avoid damage to the coated surface by the rollers, the glass is fed into the tempering furnace, with the side with the coating facing upwards. From a heat transfer perspective, to ensure uniform heating of the glass, it is required that the rate of heat transfer from the upper surface of the glass to the interior of the glass and the rate of heat transfer from the lower surface of the glass to the interior of the glass remain consistent during heating. The electric heating elements primarily heat the Low-E glass through radiation. Infrared radiation projected onto the object creates a noticeable thermal effect and is a major component of heat rays. The emissivity of the Low-E glass is non-uniform, with the lower surface of the glass having a high emissivity of around 0.90. After a large amount of heat is absorbed, the temperature of the lower surface increases, and the effective thermal conductivity increases so that the heat is further transferred to the inside. On the coated side, the emissivity typically ranges from 0.10 to 0.23. The coating layer reflects a large amount of infrared radiation, making it difficult for thermal radiation to transfer from the coated surface to the interior of the glass.

In the related art, to uniformly heat the surface of glass, it is necessary to completely cover the surface of the glass by using heating elements. This surface heating method is characterized by applying at least 50% of the heat from the heat source to the surface or near-surface layer of the object being heated. The heating method in the related art has limitations. For example, in the case of heating using chromium-aluminum-cobalt metal resistance wires, the maximum load on the heater surface at 1000°C can only reach 60 kW/m², whereas the radiative power density of a comprehensive black radiator at the same temperature can reach 149 kW/m². The resistance wire heating in the related art involves extremely dense heater arrangement. This arrangement shortens the service life of the heating elements.

During a glass heating process, the highest heating temperature of a nickel-chromium heating element in the related art is 1150°C while the highest heating temperature of an iron-chromium heating element in the related art is 1400°C. In view of furnace temperature and costs, the related art mostly uses electric heaters made of a Ni-Cr alloy. Based on the correspondence between the temperature of a heat source and the wavelength of radiation, the wavelength radiated from a heater at 1150°C is 2.04 micrometers. Considering the furnace temperature and the tempering temperature of glass, the heating temperature of a resistance wire inside an electrically heated tempering furnace is lower than 1150°C, typically between 800°C and 900°C. The corresponding heat source radiation wavelength is between 2.47 µm and 2.7 µm. This wavelength range is relatively narrow, and not all glasses absorb radiation within the range of 2.47 µm to 2.7 µm.

The related art is gradually beginning to use an infrared radiator to uniformly heat transparent glass to increase the heating speed of the glass and shorten the heating time. However, this method has the disadvantage that it cannot ensure uniform radiation across the entire surface of a glass, resulting in a projection of the intensity distribution of the infrared radiation source formed on the surface of the glass that requires to be heated.

To address this problem, the glass industry has introduced "forced convection heat transfer technology" into tempering furnaces. Adding upper forced convection in a roller-type tempering furnace is beneficial for symmetric heating of glass. Moreover, for Low-E glass, the presence of a coating significantly increases the heating time. Increasing forced convection can shorten the heating time and reduce the furnace temperature, greatly beneficial for reducing the coating loss and improving the production efficiency. Adding forced convection to the lower part is unnecessary. In a roller-type tempering furnace, due to unavoidable heat transfer from the roller and natural convection in the lower part, the lower part is heated too quickly and the glass is upturned to form white mist in the middle part. More importantly, the middle part is heated too fast. When the center of the glass reaches the tempering temperature, the lower surface is already overheated and too soft, resulting in pits or roller track marks on the lower surface of the glass which is a headache. This contradiction will become more prominent if forced convection is added to the lower part.

However, in glass tempering in related technologies, especially in the tempering of coated glass and Low-E glass, there are still problems in the early stage of glass entering the furnace, such as the temperature of the lower surface of the glass rising too fast, the temperature of the upper surface of the glass rising too slowly to lead to upward warping and vibration of the glass, extremely dense distribution of heating elements in the electric heating tempering furnace to lead to too short life and slow heating speed, and uneven heating phenomenon and high energy consumption caused by the infrared radiation heating technology applied to the tempering furnace.

Further relevant technologies are also known from US 6 427 488 B1 which relates to a METHOD FOR HEATING GLASS SHEETS TO BE TEMPERED OR HEAT-STRENGTHNED.

Further relevant technologies are known from CN 215 403 833 U which relates to a NOZZLE AND GLASS TEMPERING FURNACE WITH SAME.

Further relevant technologies are also known from CN 115 650 567 A which relates to a GLASS TEMPERING HEATING FURNACE.

### SUMMARY

The present invention is set out in the appended set of claims.

### BRIEF DESCRIPTION OF DRAWINGS

FIG. 1 illustrates a glass tempering furnace according to an embodiment of the present application.
FIG. 2 illustrates a preheating furnace section of the glass tempering furnace at a first angle of view according to an embodiment of the present application.
FIG. 3 illustrates the preheating furnace section of the glass tempering furnace at a second angle of view according to an embodiment of the present application.
FIG. 4 illustrates the preheating furnace section of the glass tempering furnace at a third angle of view according to an embodiment of the present application.
FIG. 5 illustrates smoke ejection ports of the preheating furnace section of the glass tempering furnace according to an embodiment of the present application.
FIG. 6 is an enlarged view of the smoke ejection ports and an incrementer of the preheating furnace section of the glass tempering furnace according to an embodiment of the present application.
FIG. 7 illustrates a heating furnace section of the glass tempering furnace at a first angle of view according to an embodiment of the present application.
FIG. 8 illustrates the heating furnace section of the glass tempering furnace at a second angle of view according to an embodiment of the present application.
FIG. 9 illustrates a soaking furnace section of the glass tempering furnace according to an embodiment of the present application.
FIG. 10 is a section view of a single air duct of the soaking furnace section of the glass tempering furnace taken along the width direction of the furnace section according to an embodiment of the present application.
FIG. 11 illustrates a flow field analysis of the present application.
FIG. 12 illustrates an infrared transmittance curve of glass according to an embodiment.
FIG. 13 illustrates a porous medium burner according to an embodiment of the present application.
FIG. 14 is a section view of FIG. 13.
FIG. 15 is a connection diagram of a cooling interlayer of FIG. 14.
FIG. 16 is another connection diagram of the cooling interlayer of FIG. 14.

### Reference list

10. glass tempering furnace; 20. glass;
100. preheating furnace section; 101. drive roller; 1011. first end; 1012. second end; 102. preheating-section upper furnace portion; 103. preheating-section lower furnace portion; 120. general smoke vent; 130. smoke suction port; 131. first smoke suction port; 132. second smoke suction port; 133. third smoke suction port; 134. fourth smoke suction port; 135. fifth smoke suction port; 136. sixth smoke suction port; 140. smoke ejection port; 141. first smoke ejection port; 142. second smoke ejection port; 143. third smoke ejection port; 144. fourth smoke ejection port; 150. smoke ejection air knife; 151. right air knife of upper furnace portion; 152. left air knife of upper furnace portion; 153. air knife outlet; 160. incrementer; 161. Venturi channel; 162. contraction section; 163. gap; 164. incrementer outlet;
200. heating furnace section; 201. upper furnace portion of the heating section; 202. lower furnace portion of the heating section; 210. infrared burner; 2111. cover plate; 2112. air inlet; 2113. heat release port; 2114. inner cylinder; 2115. premixing area; 212. cooling interlayer; 2121. outer cylinder; 2122. cooling inlet; 2123. cooling outlet; 218. anti-flashback area; 219. combustion area; 213. heat-insulating material plate; 214. porous medium material layer; 2151. thermocouple; 2152. heat preservation material layer; 2153. heat-insulating material support layer; 2154. bottom heat-insulating panel; 2155. pressing mechanism; 2156. bottom panel; 2157. stiffener; 2161. combustion-supporting air duct; 2162. combustion-supporting fan; 2163. first branch; 2164. second branch; 2165. air-gas mixer; 2171. cooling water tank; 2712. hot water tank; 220. airflow stirring device;
300. soaking furnace section; 310. air duct; 311. centrifugal fan; 3121. air-blowing air duct section; 31211. first air duct portion; 31212. second air duct portion; 3122. air-suction air duct section; 313. air outlet; 314. air suction port; 320. heater; 321. heating part; 330. soaking-section upper furnace portion; 340. soaking-section lower furnace portion; 350. receiving cavity; 351. bottom wall; 352. top wall; 353. sidewall;
400. furnace section lifting apparatus

### DETAILED DESCRIPTION

In the description of the present application, it is to be understood that the orientation or position relationships indicated by terms "center", "longitudinal", "lateral", "length", "width", "thickness", "above", "below", "front", "back", "left", "right", "vertical", "horizontal", "top", "bottom", "inside", "outside", "clockwise", "counterclockwise", "axial", "radial", "circumferential", etc. are based on the orientation or position relationships shown in the drawings, merely for facilitating description of the present application and simplifying description, and do not indicate or imply that the apparatus or element referred to has a specific orientation and is constructed and operated in a specific orientation, and thus it is not to be construed as limiting the present application.

In addition, a feature defined as a "first" feature or a "second" feature may explicitly or implicitly include one or more of such features, which are used for distinguishing and describing the features, and there is no order or importance. In the description of the present application, "multiple" means two or more unless otherwise noted.

In the description of the present application, it is to be noted that unless otherwise expressly specified and limited, the term "mounted", "connected to each other" or "connected" should be construed in a broad sense as securely connected, detachably connected or integrally connected; mechanically connected or electrically connected; directly connected to each other or indirectly connected to each other via an intermediary; or intraconnected between two components. For those of ordinary skill in the art, specific meanings of the preceding terms in the present application may be understood based on specific situations.

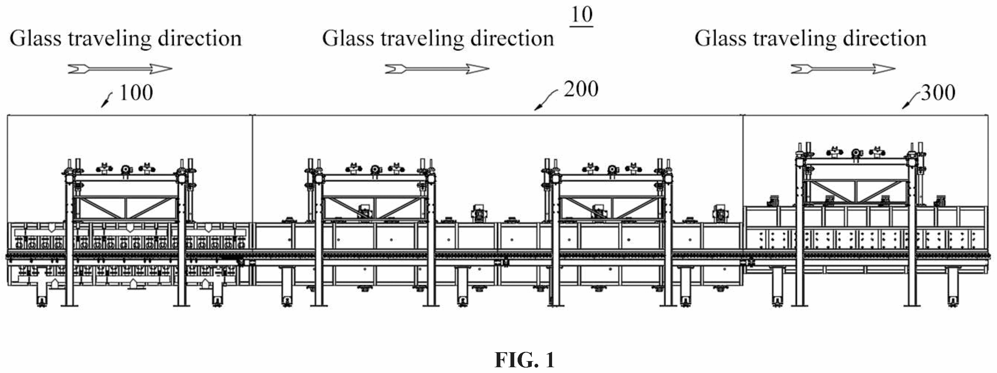

Referring to FIG. 1 to FIG. 11, embodiments of the present application provide a glass tempering furnace 10. The glass tempering furnace 10 includes a preheating furnace section 100, a heating furnace section 200, and a soaking furnace section 300 that are disposed in sequence along the glass traveling direction of glass 20.

In some embodiments of the present application, the preheating furnace section 100 has a feed port. A general smoke vent 120 is disposed adjacent to the feed port.

In the related art, the general smoke vent is generally disposed on a heating section. In the present application, the smoke vent of the heating section is moved forward to the position of the feed port of the preheating section. On the one hand, smoke is moved from the heating section to the preheating section to serve as the heat source of the preheating section. On the other hand, the smoke vent is spaced a certain distance from the heating section, reducing the impact of smoke release on the temperature field of the heating section.

In some embodiments of the present application, the preheating furnace section 100 is divided into multiple sections along the glass traveling direction of the glass 20. Each section has a smoke suction port 130 and a smoke ejection port 140. The smoke suction port 130 is configured to suck smoke from the heating furnace section. The smoke from the heating furnace section 200 is sucked out though the smoke suction port 130, and the sucked smoke is delivered to the preheating furnace section 100 by the smoke ejection port 140.

In the related art, utilizing a "chimney effect", smoke generated by a heating section of a glass tempering furnace is released by a smoke suction port disposed at the entrance of the furnace and a chimney connected to the smoke suction port.

In the present application, the preheating furnace section 100 is disposed before the heating furnace section 200. The general smoke vent 120 of the whole equipment is disposed at the entrance of the preheating section. Moreover, along the glass traveling direction, a smoke suction port 130 is disposed on each section of the preheating furnace section 100, the smoke in the furnace is sucked out though each smoke suction port 130 by a fan, and then the sucked smoke is delivered to the furnace through the smoke ejection port 140 of each section of the preheating furnace section 100, so that the internal gas circulation in the preheating furnace section 100 is established. In this manner, it is achieved that the pressure in the furnace maintains a preset target of "slightly positive pressure", and then it is achieved that the gas in the furnace generally flows from the heating furnace section 200 to the preheating furnace section 100.

In an actual working process, each section of the preheating furnace section 100 has a smoke suction port 130. Smoke in the furnace can be sucked out through each smoke suction port 130 by a fan. In this manner, pressure in the heating furnace section 200 decreases so that pressure in the heating furnace section 200 is greater than pressure in the preheating furnace section 100. Meanwhile, smoke in the heating furnace section 200 enters the preheating furnace section 100 under the action of a pressure difference. Then the sucked smoke is delivered to the preheating furnace section 100 through each smoke ejection port 140. In this manner, smoke in the furnace generally flows from the heating furnace section 200 to the preheating furnace section 100 recurrently.

With the preheating furnace section 100, on the one hand, smoke in the heating furnace section 200 can be reused; on the other hand, the preheating furnace section 100 is divided into multiple sections, smoke is sucked out through the smoke suction ports 130 and delivered through the smoke ejection ports 140 so that the temperature of the glass 20 in the preheating furnace section 100 can rise in a stepped manner. Heat of the preheating furnace section 100 comes from smoke of the heating furnace section 200, and considering the continuous entry of the glass 20 as a cold source, the temperature of the drive rollers 101 of the preheating furnace section 100 is far lower than the temperature of the drive rollers 101 of the heating furnace section 200. In this manner, it can effectively avoid deformation (upward warping) and vibration caused by an excessive temperature difference between the upper surface of the glass 20 and the lower surface of the glass 20 due to excessive temperature of the drive rollers 101 in the initial stage in which the glass 20 enters the heating furnace section.

In the present application, the soaking furnace section 300 is disposed after the heating furnace section 200, which further ameliorates the temperature nonuniformity on the surface of the glass 20 in the heating stage and satisfies higher-standard uniformity requirements, thereby further improving the tempering quality of the glass 20, particularly satisfying tempering requirements of coated glass and Low-E glass with high-standard uniformity requirements.

In a conventional glass tempering furnace of the related art, it is necessary to address the problem of upward warping and vibration caused by non-uniform heating of the glass in the heating section at the initial stage. The glass tempering furnace 10 of the present application is completely different from a conventional glass tempering furnace in the related art. In the glass tempering furnace 10 of the present application, the preheating furnace section 100 is independently established, smoke in the heating section is used as the heat source, and the preheating section is independently established, cooling down the temperature of the ceramic rollers in the preheating section. The glass 20 is preheated in a forced convection manner, solving the problem of warping and vibration caused by non-uniform heating of the glass 20 in the initial stage.

In some embodiments of the present application, the preheating furnace section 100 is divided into three sections in the glass traveling direction. The preheating furnace section 100 is divided into a preheating-section upper furnace portion 102 and a preheating-section lower furnace portion 103. The preheating-section upper furnace portion 102 is disposed above the drive rollers 101. The preheating-section lower furnace portion 103 is disposed below the drive rollers 101.

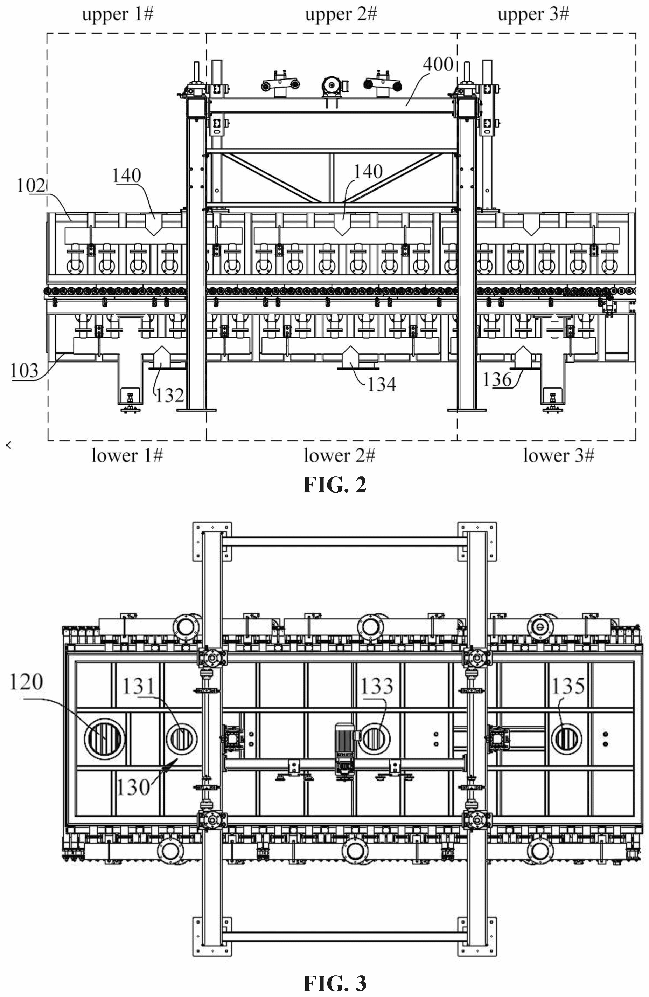

Referring to FIG. 2 and FIG. 3, the preheating furnace section 100 is divided into six sections: upper 1#, lower 1#, upper 2#, lower 2#, upper 3#, and lower 3#. Each of the six sections is provided with a smoke suction port 130, and the smoke in the furnace is sucked out by a fan through the smoke suction ports 130, and then the sucked smoke is delivered to the furnace through the smoke ejection port 140 of each of the six sections, thereby establishing an internal smoke circulation in the furnace.

Referring to FIG. 2 and FIG. 3, in the preheating furnace section 100, a first smoke suction port 131 is disposed on upper 1#, a second smoke suction port 132 is disposed on lower 1#, a third smoke suction port 133 is disposed on upper 2#, a fourth smoke suction port 134 is disposed on lower 2#, a fifth smoke suction port 135 is disposed on upper 3#, and a sixth smoke suction port 136 is disposed on lower 3#.

In an embodiment, taking the upper 1# as an example, the first smoke suction port 131 of the upper 1# is connected to the suction port of a smoke suction fan. Smoke in the furnace is sucked out by the smoke suction fan. By dividing the pipeline into two, the sucked smoke is delivered to the first smoke ejection port 141 and the second smoke ejection port 142 of upper 1#. Similarly, in lower 1#, the second smoke suction port 132 is connected to the suction port of a smoke suction fan, and smoke in the furnace is sucked out by the smoke suction fan. By dividing the pipeline into two, the sucked smoke is delivered to the third smoke ejection port 143 of lower 1# and the fourth smoke ejection port 144 of lower 1#.

In some embodiments of the present application, multiple smoke ejection air knives 150 are disposed on upper and lower sides of the drive rollers 101 along the glass traveling direction in the preheating furnace section, and the smoke ejection air knives 150 on upper and lower sides of the drive rollers 101 are staggered with the drive rollers 101 in the height direction. The smoke ejection port 140 is configured to deliver the sucked smoke to the smoke ejection air knives 150.

Referring to FIG. 2 to FIG. 4, in an embodiment, each of upper 1#, lower 1#, upper 2#, lower 2#, upper 3#, and lower 3# of the preheating furnace section 100 is provided with multiple smoke ejection air knives 150.

In some embodiments of the present application, the diameter of the air knife outlet 153 of each smoke ejection air knife 150 is contracted.

In some embodiments of the present application, an incrementer 160 is disposed in the preheating furnace 100. The incrementer 160 has a channel 161 with a Venturi structure. The channel 161 is connected to the air knife outlet 153 of each smoke ejection air knife 150.

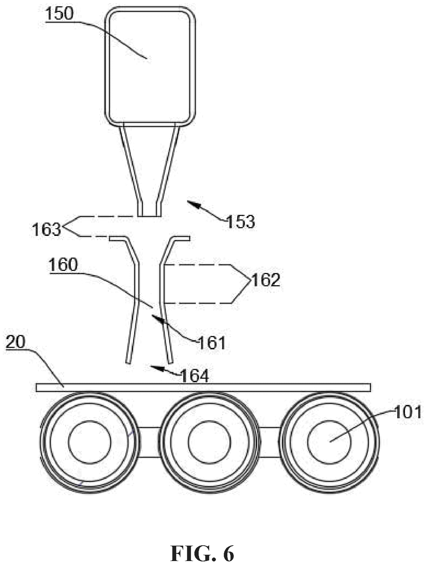

Referring to FIG. 6 and FIG. 11, with the arrangement of the channel 161 with a Venturi structure in the incrementer 160, the Venturi effect is generated, an "increment" effect is formed and the amount of air blown to the glass 20 is amplified. According to a flow field simulation analysis and an actual experimental verification, the incrementer 160 of the present application greatly enhances the heating effect.

In the related art, a smoke ejection structure is typically a "circular hole staggered arrangement type" or a "slit-type" smoke ejection structure. The present application provides a structure with an "increment" effect, increasing the amount of ejected smoke and enhancing the heating efficiency.

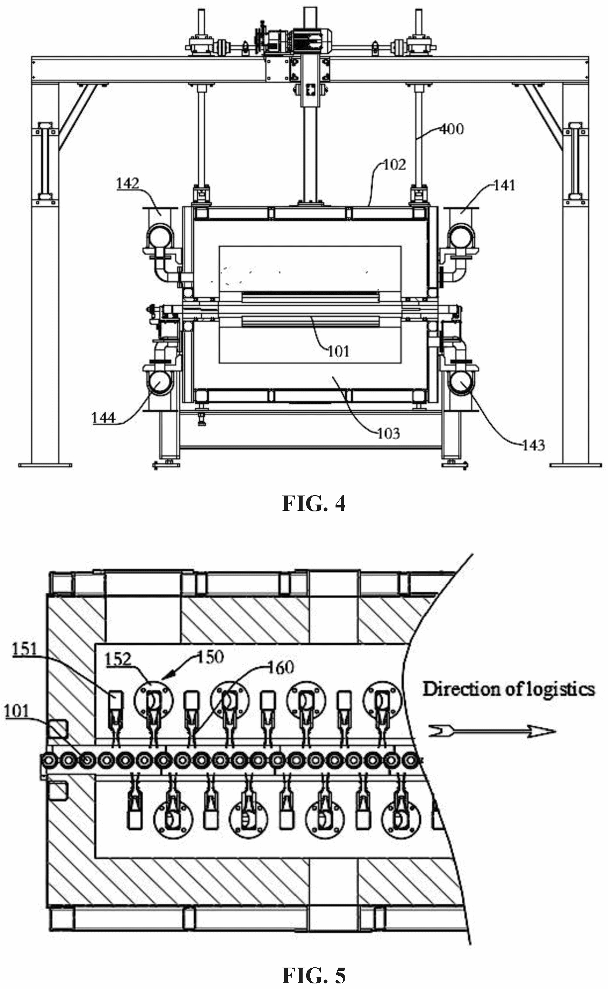

Illustratively, referring to FIGS. 5-6, in the illustrated embodiment, FIG. 5 and FIG. 6 show the incrementer structure in the preheating furnace section 100. In the stage in which the empty furnace is heated up, the drive rollers 101 in the furnace are cold; and to prevent high-temperature smoke from directly ejecting onto the surface of the drive rollers 101, the smoke ejection air knives 150 do not blow directly onto the drive rollers 101, and the smoke ejection air knives 150 are staggered with the drive rollers 101 to blow smoke toward the gaps between the drive rollers 101. As shown in FIG. 5 and FIG. 6, the interior of the preheating furnace section 100 is mainly composed of drive rollers 101, right air knives 151 of the upper furnace portion, left air knives 152 of the upper furnace portion, and incrementers 160. The glass 20 travels from left to right under the rotation of the drive rollers 101. The fan sucks smoke in each section of the preheating furnace section 100, and the preheated smoke is delivered to each smoke ejection air knife 150 through each smoke ejection port 140 outside the furnace. Each specially and structurally designed smoke ejection air knife 150 contracts at a respective air knife outlet 153. Each incrementer 160 is mounted at a preset distance away from a respective air knife outlet 153. Each incrementer 160 is specially designed to produce an "increment" effect and amplify the amount of air blown to the glass 20. According to a flow field simulation analysis and an actual experimental verification, each incrementer 160 greatly enhances the heating effect.

In an embodiment, referring to FIG. 6, smoke ejected from the smoke ejection air knife 150 flows faster and forms a low-pressure area when passing the contraction section 162 of the incrementer 160. Under the action of the low-pressure area, smoke in the preheating furnace section 100 is sucked from the gap 163 between the smoke ejection air knife 150 and the incrementer 160 into the incrementer 160. Two gas flows converge at the incrementer outlet 164 and are ejected to the heated surface of the glass 20. In this manner, a greater gas ejection to the heated surface of the glass 20 is achieved under the same fan power conditions.

In some embodiments of the present application, the heating furnace section 200 is disposed after the preheating furnace section 100 along the glass traveling direction.

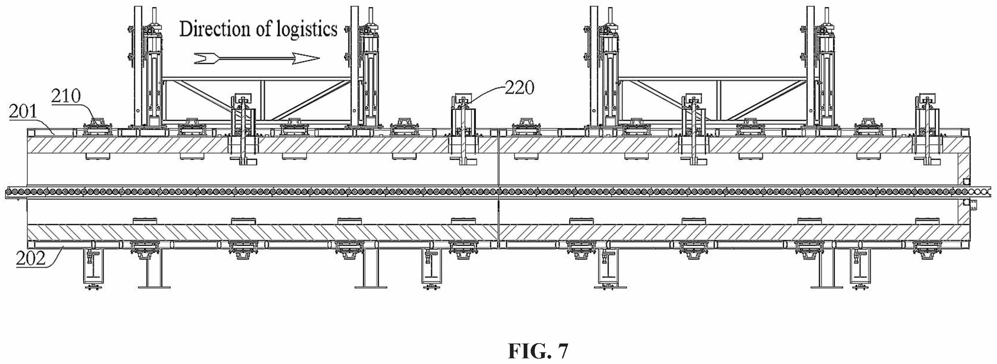

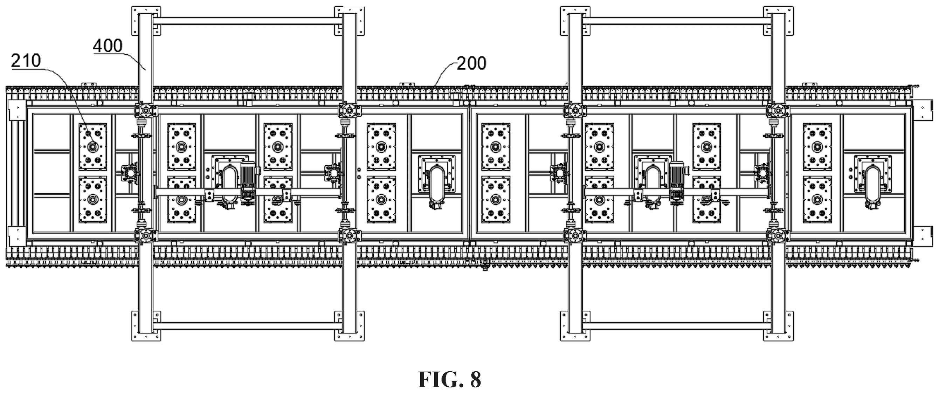

In some embodiments of the present application, referring to FIG. 7 and FIG. 8, the heating furnace section 200 is divided into an upper furnace portion of the heating section 201 and a lower furnace portion of the heating section 202. The upper furnace portion of the heating section 201 is disposed above the drive rollers 101. The heating-section lower furnace portion 202 is disposed below the drive rollers 101.

In some embodiments of the present application, the heating furnace section 200 is provided with multiple infrared burners 210. Each infrared burner 210 is a porous medium burner.

**The heating** furnace section 200 of the present application uses a porous medium combustion technology mainly based on infrared radiation. Three heat exchange modes: convection, heat conduction, and radiation are used to make the temperature of the combustion area 219 approximately uniform and make the temperature gradient relatively stable. The heating furnace section 200 of the present application uses a porous medium combustion technology to construct a wideband infrared heating section to heat the glass rapidly and uniformly. In this manner, the glass tempering furnace of the present application is applicable to not only ordinary glass but also coated glass and Low-E glass.

The porous medium combustion technology enables stable combustion and a high volume thermal strength. Compared with free combustion, porous medium combustion has the advantages of high combustion rate, good combustion stability, large load adjustment range, large volume thermal strength, small burner volume, good gas adaptability, low pollutant discharge from smoke, wide combustion limit, and low combustible heat value.

In the art, a heating furnace uses gas fuel whose combustion is featured by free flame. This type of combustion requires a large space, has a large temperature gradient around the flame, and easily generates a high local temperature. Nitrogen oxide (NOx) generation becomes noticeable when the temperature is higher than 1500 °C. Because of the highly toxic property of nitrogen oxide (NOx), reducing NOx emission is also very important.

Compared with conventional free-flame combustion in a heating furnace of the related art, porous medium combustion in the heating furnace section 200 of the present application greatly improves the combustion efficiency. In the combustion process, a porous medium plays a key role. Porous medium materials have the following features: superior heat transfer properties, forced gas flow in and out, separation and convergence, enhanced convection, uniform temperature distribution, and low temperature level, reducing pollutant emission; low volume density, namely low thermal inertia, enabling a rapid temperature rise during startup and quick adaptation to load changes; and being operable within a temperature range of 800°C to 1200°C.

In some embodiments of the present application, each infrared burner 210 of the heating furnace section 200 uses a porous medium material as the main combustion component, and gas is burned in the porous medium material. The porous medium material of the present application is SiC. The radiation rate of SiC is about 0.9, far higher than the radiation rate of a common metal alloy heating material, and thus has a better radiation heating effect. Each infrared burner 210 of the heating furnace section 200 of the present application uses SiC as a porous medium material, improving the heating effect.

The heating furnace section 200 of the present application uses infrared burners 210 whose core technology is porous medium combustion.

In some embodiments of the present application, in the heating furnace section 200, the infrared burners 210 are staggered on upper and lower sides of the drive rollers 101 along the glass traveling direction.

Referring to FIG. 7, in the illustrated embodiment, in the heating furnace section 200, each infrared burner 210 in the upper furnace portion of the heating section is staggered with each infrared burner 210 in the lower furnace portion of the heating section in the glass traveling direction.

In the heating furnace section 200, the infrared burners 210 are staggered on upper and lower sides of the drive rollers 101 along the glass traveling direction so that the heating uniformity can be improved.

In some embodiments of the present application, airflow stirring devices 220 are disposed in the heating furnace section 200 and spaced from the infrared burners 210 along the glass traveling direction.

A drawback of infrared radiation is the inability to ensure uniform radiation across the entire surface of the object, resulting in a projected intensity distribution of the infrared radiation source on the surface that requires to be heated. The airflow stirring devices 220 are disposed in the heating furnace section 200 to cooperate with the infrared burners 210. The airflow stirring devices 220 are spaced from the infrared burners 210. The airflow stirring devices 220 can stir smoke in the furnace, avoiding local concentration of high-temperature smoke in the furnace and thus avoiding non-uniform furnace temperature; and enabling the stirred smoke to flow on the surface of the glass 20 at a preset speed and thus increasing convective heat transfer.

In an embodiment, referring to FIG. 7 and FIG. 8, the main structure of the heating furnace section 200 is shown, and the infrared burners 210 are staggered along the glass traveling direction 20 to avoid a temperature field nonuniformity caused by heat concentration. From the perspective of temperature control, the heating furnace section 200 is divided into four areas, and each area is equipped with an airflow stirring device 220. As shown in FIG. 8, in the furnace width direction, the infrared burners 210 are arranged on two sides of each area.

In some embodiments of the present application, multiple air ducts 310 are disposed in the soaking furnace section 300 and configured to generate horizontally parallel airflow on the upper and lower surfaces of the glass 20. Specifically, the soaking furnace section 300 includes a receiving cavity 350 and air ducts 310. In an embodiment, the drive rollers 101 are disposed on the bottom wall 351 of the receiving cavity 350 and configured to drive the glass 20.

Glass "tempering" involves a "heating" process and a "cooling" process. If the surface temperature uniformity of the glass is not well ensured before the rapid cooling process, a serious quality problem occurs during the rapid cooling process.

As mentioned in the background, in a related art, forced convection is generally provided in the heating section. In this manner, when the glass is softened at a high temperature, the airflow with a certain speed and pressure will form streaks on the surface of the softened glass. This problem is solved in the present application where horizontal parallel airflow is created in the soaking section.

In addition to the preceding disadvantage of the forced convection, for direct-fired gas heating, the high-speed airflow in the furnace seriously affects the porous medium burners.

The thermal conductivity of the glass is very low. To homogenize the temperature of the glass within a specified period of time on the premise that the productivity is satisfied, it is necessary to improve the convective heat transfer efficiency/capability. For the airflow soaking technology, to ensure the temperature uniformity of the product, one of the following two conditions must be satisfied:
(1) fully turbulent airflow
(2) uniform horizontal airflow

Fully turbulent airflow requires a powerful fan. Such airflow is not conducive to the stability of light and thin glass on drive rollers 101. Moreover, impurities on the insulation materials in the furnace and impurities in the furnace chamber are carried by the turbulent airflow and cover the entire furnace chamber and the surface of the glass, causing the quality of the surface of the glass to be out of control.

In the present application, the soaking furnace section 300 for forced convection of horizontal parallel airflow delivered in the subsequent after the heating furnace section 200, which serves as the final heating and temperature adjustment process. The required power in this process is far smaller than the power of the heating section. Therefore, the power output of the heater 320 is required to respond fast and continuously adjustable. In the present application, the heat source of the soaking furnace section 300 is an electric tubular heater integrated box that is plugged into the air duct.

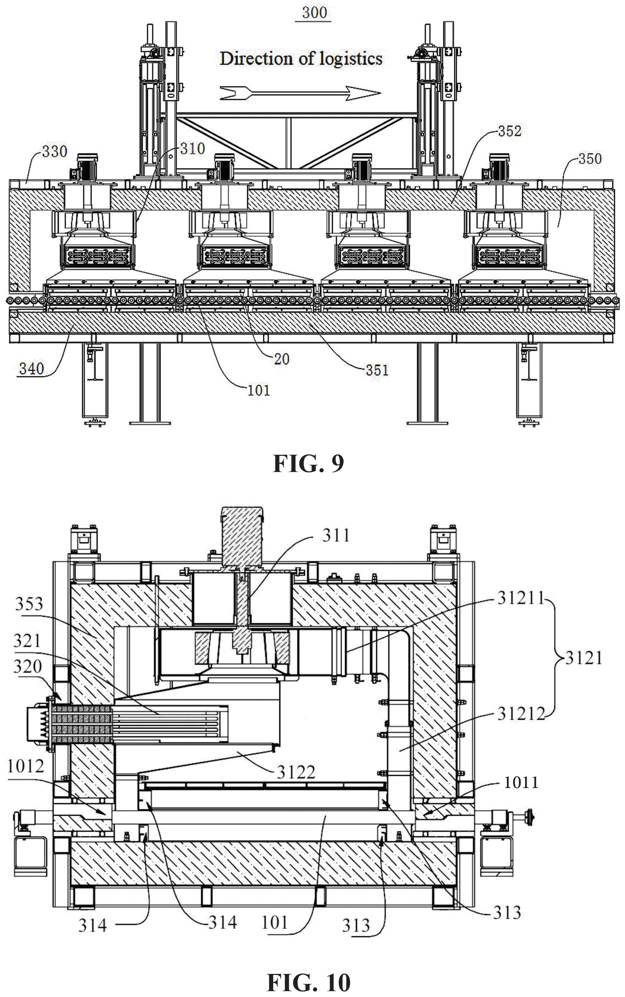

In some embodiments of the present application, referring to FIG. 9 and FIG. 10, the soaking furnace section 300 is divided into multiple sections. Illustratively, the soaking furnace section 300 is divided into four sections, and each section has an independent air duct 310.

In one embodiment, the four sections of air ducts 310 are disposed in the receiving cavity 350. Each air duct 310 has air outlets 313 and air suction ports 314. The air outlets 313 are respectively disposed above and below the drive rollers 101 and at a first end 1011 of the drive rollers 101 along the radial direction of the drive rollers 101 to enable air blown out from the air outlet 313 to reach the first end 1011 of the drive roller 101, blow out from the gap between adjacent drive rollers 101, and blow over the upper and lower surfaces of the glass 20 along a direction parallel to the drive rollers 101.

In an embodiment, the air suction ports 314 are respectively disposed above and below the drive rollers 101, and adjacent to a second end 1012 of the drive rollers 101 and each of the air suction ports 314 is configured to suck the gas blowing over the upper and lower surfaces of the glass 20.

In the soaking furnace section 300 of the present application, air blown from the air outlet 313 can reach the first end 1011 of the drive roller 101, blow out from the gap between adjacent drive rollers 101, and blow over the upper and lower surfaces of the glass 20 parallel to the drive roller 101. In this manner, air can sweep across horizontally in parallel to the upper and lower surfaces of the glass 20 to complete heat exchange with the glass 20. This horizontally parallel soaking mode can greatly improve the non-uniform heating temperature of the surface of the workpiece.

In some embodiments of the present application, each air duct 310 includes a centrifugal fan 311 and an air duct body. The centrifugal fan 311 is configured to rotate to suck the air in and to throw the air out, so that the air flows in the air duct body, is blown out from the gap between adjacent drive rollers 101, and sweeps across horizontally in parallel to the upper and lower surfaces of the glass 20 to complete heat exchange with the glass 20. In an embodiment, the air duct body includes an air-suction air duct section 3122 and an air-blowing air duct section 3121. A first end of the air-blowing air duct section 3121 is connected to the outlet of the centrifugal fan 311. An air outlet 313 is disposed at a second end of the air-blowing air duct section 3121. A first end of the air-suction air duct section 3122 is connected to the inlet of the centrifugal fan 311. A second end of the air-suction air duct section 3122 is provided with an air suction port 314.

A first end of the air-blowing air duct section 3121 is connected to the outlet of the centrifugal fan 311. An air outlet 313 is disposed at a second end of the air-blowing air duct section 3121. When the centrifugal fan 311 rotates at a high speed, air is sucked in from the inlet of the centrifugal fan 311, is thrown out in the tangent direction into the air-blowing air duct section 3121, passes through the air-blowing air duct section 3121, and reaches the air outlet 313. Air blown out from the air outlet 313 reaches the first end 1011 of the drive roller 101, collides with the sidewall surface of the first end 1011, changes direction, is blown out from the gap between the adjacent drive rollers 101, and blows over the upper and lower surfaces of the glass 20 in parallel to the drive rollers 101, thereby realizing horizontally and parallelly soaking the workpiece.

In an embodiment, referring to FIG. 9 and FIG. 10, the receiving cavity 350 is hexahedral. The drive rollers 101 are disposed above the bottom wall 351. The centrifugal fan 311 is disposed on the top wall 352. The inlet of the centrifugal fan 311 is located at the bottom of the centrifugal fan 311. When the drive rollers 101 drive the workpiece, the inlet of the centrifugal fan 311 is located above the workpiece.

In an embodiment, the air-blowing air duct section 3121 includes a first air duct portion 31211 and a second air duct portion 31212. The first air duct portion 31211 is parallel to the drive roller 101. The second air duct portion 31212 is perpendicular to the drive roller 101. The air outlet 313 is disposed on a sidewall surface of the second air duct portion 31212 facing the first end 1011 of the drive roller 101.

In an embodiment, referring to FIG. 9 and FIG. 10, the first air duct portion 31211 is disposed on the top wall 352 relative to the drive roller 101. The second air duct portion 31212 is disposed on the sidewall 353 of the receiving cavity 350.

In an embodiment, a first end of the first air duct portion 31211 is connected to the outlet of the centrifugal fan 311, a second end of the first air duct portion 31211 is connected to the inlet of the second air duct portion 31212, and a second end of the second air duct portion 31212 is the air outlet 313.

In an embodiment, the first air duct portion 31211 and the second air duct portion 31212 are square.

In some implementations, the first end of the first air duct portion 31211 communicating with the outlet of the centrifugal fan 311 has a small size, and the second end of the first air duct portion 31211 has a large size, so that the first air duct portion 31211 is approximately trumpet-shaped. The size of the inside channel of the second air duct portion 31212 is set according to the length of the soaking furnace section 300. The size of the inside channel of the second air duct portion 31212 determines the coverage width of the blown air, that is, the width of the air blowing over the workpiece.

In some embodiments of the present application, the inlet of the centrifugal fan 311 is disposed below the impeller of the centrifugal fan 311.

In some embodiments of the present application, the soaking furnace section 300 also includes a heater 320. The heater 320 is configured to heat air that has completed heat exchange to a preset temperature. The heater 320 is disposed below the impeller of the centrifugal fan 311 so that air sucked in by rotation of the impeller passes through the heater 320 and then enters the impeller of the centrifugal fan 311. The air blowing over the upper and lower surfaces of the workpiece completes heat exchange with the workpiece. At this time, the temperature of the air decreases, and the air passes though the heater 320 and can be heated to the preset temperature again.

The temperature of such air heated by the heater 320 is not uniform. In this embodiment, air heated by the heater 320 is sucked into the centrifugal fan 311 again and stirred by the impeller of the centrifugal fan 311. In this manner, the non-uniform air that has been heated by the heater 320 is fully stirred and dispersed so that the temperature of the air is homogenized. The homogenized air is sucked into the air duct 310 again by the centrifugal fan 311 rotating at high speed to equalize the heat of the workpiece, thereby making cyclic heat-balance possible, and thus facilitating energy conservation and emission reduction.

Referring to FIG. 9 and FIG. 10, in an embodiment, the heater 320 is disposed on the sidewall 353 of the receiving cavity 350 opposite to the second air duct portion 31212.

In some embodiments of the present application, the first end of the air-suction air duct section 3122 of the soaking furnace section 300 is connected to the inlet of the centrifugal fan 311, and the air suction port 314 is disposed at the second end of the air-suction air duct section 3122.

In some embodiments of the present application, the heating part 321 of the heater 320 is disposed in the air-suction air duct section 3122.

The heating part 321 of the heater 320 is disposed in the air-suction air duct section 3122 so that air blowing over the upper and lower surfaces of the glass 20 can be heated by the heating part 321 of the heater 320 when passing through the air-suction air duct section 3122, thereby improving the heating efficiency and reducing the energy consumption.

The first end of the air-suction air duct section 3122 of the soaking furnace section 300 is connected to the inlet of the centrifugal fan 311, and the air suction port 314 is disposed at the second end of the air-suction air duct section 3122. Thus, air blowing over the upper and lower surfaces of the glass 20 can pass through the air-suction air duct section 3122 to reach the inlet of the centrifugal fan 311, and is sucked into the centrifugal fan 311, and then can be stirred again and circulated to soak. In some embodiments of the present application, the soaking furnace section 300 includes multiple air ducts 310. The air ducts 310 are spaced apart from each other along the rotation direction of the workpiece.

In an embodiment, referring to FIG. 9 and FIG. 10, the soaking furnace section 300 has four independently controlled air ducts: a first air duct, a second air duct, a third air duct, and a fourth air duct. The lengthwise section of a single air duct in the width direction of the soaking furnace section is as shown in FIG. 10. The centrifugal fan 311 rotates at a high speed. Air is sucked in from the bottom of the impeller of the centrifugal fan 311 and is thrown out in the tangent direction. Air flows in the air duct body, is blown out from the gap between adjacent drive rollers 101 and then sweeps across horizontally in parallel to the upper and lower surfaces of the glass 20. Air blown out from each section of the air duct can cover the surfaces of the glass 20 passing through the section of the air duct and complete heat exchange with the glass 20. The temperature of the air that has completed heat exchange has dropped and can reach the specified temperature again after being heated by the heater 320 in the soaking furnace section 300. In fact, the temperature of air heated by the heater 320 in the soaking furnace section 300 is non-uniform. This non-uniform air cannot be directly blown to the glass 20. In the present application, the impeller of the centrifugal fan 311 has a stirring function. The impeller of the centrifugal fan 311 fully stirs and disperses the non-uniform air that has been heated by the heater 320 in the soaking furnace section 300 so that the temperature of the air is homogenized. The homogenized air is delivered to the air duct body again to complete the heating and temperature rise of the glass 20.

In some embodiments of the present application, the soaking furnace section 300 is divided into a soaking-section upper furnace portion 330 and a soaking-section lower furnace portion 340. The soaking-section upper furnace portion 330 is disposed above the drive rollers 101. The soaking-section lower furnace portion is disposed below the drive rollers 101.

The preheating furnace section 100, the heating furnace section 200, and the soaking furnace section 300 are each divided into an upper portion and a lower portion, facilitating mounting or removal of the drive rollers 101 and the maintenance of the device. In an embodiment, the drive rollers 101 may be ceramic rollers common in the art.

In some embodiments of the present application, each of the preheating furnace section 100, the heating furnace section 200, and the soaking furnace section 300 has a furnace section lifting apparatus 400. The furnace section lifting apparatus 400 is connected to the upper portion and configured to lift the upper portion.

In some embodiments of the present application, a glass tempering method is provided. The method is applied by the glass tempering furnace 10 of any previous embodiment to temper the glass.

In some embodiments of the present application, the method applied by the glass tempering furnace 10 of any previous embodiment to temper the glass 20 includes the following steps:
In S1, the manual (or automated device) tiles the glass 20 in a single layer on the material layout platform to place the products;
In S2, the glass 20 is carried by the drive rollers 101, and enters the preheating furnace section 100, where the product is preheated in the preheating furnace section 100 (at a temperature within a certain range).
In S3, the glass 20 starts to enter the heating furnace section 200, and the product temperature rises to 600°C to 640°C, remains at the set temperature and continues to travel after reaching the set temperature.
In S4, the glass 20 is carried from the heating furnace section 200 to the soaking furnace section 300 and is heated and soaked by circulating gas passing the upper and lower surfaces of the glass 20. Gas that has completed heat exchange with the glass 20 that has a relatively low and non-uniform temperature is circulated to the heater 320 and heated by the heater 320. The non-uniform gas is then strongly stirred by the impeller of the centrifugal fan 311 to become homogenized. The gas passes the upper and lower surfaces of the glass 20 under the action of the centrifugal fan 311 and the air duct 310.

The beneficial effect of the glass tempering method of the present application is as follows: The method uses the preceding glass tempering furnace to temper glass, so that the method can heat the glass rapidly and evenly. The method is applicable to not only tempering of ordinary glass, but also tempering of coated glass and Low-E glass.

The glass that has been heated up and has uniform temperature can enter the next process.

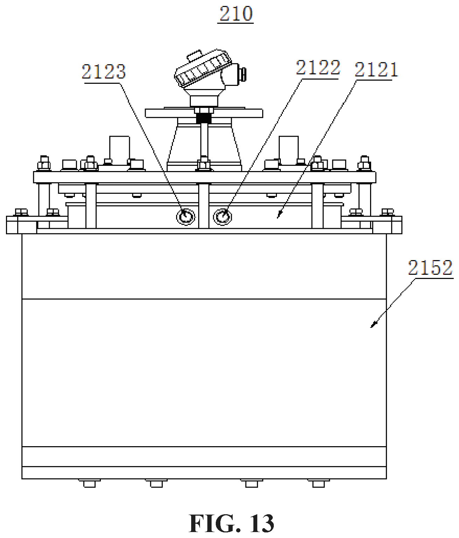

Referring to FIG. 13 to FIG. 16, the preceding porous medium burner is described in detail.

According to analysis, a porous medium burner cannot be applied to a high temperature scenario for the following reasons:
(1) Compared with medium and low temperatures, a high furnace temperature brings about a considerable amount of "background radiation" in the furnace. According to radiation-related knowledge, radiation is related to the fourth power of temperature, and the background radiation capacity at a furnace temperature of 1000°C is nearly six times that at a furnace temperature of 650°C. During the heat transfer process inside the furnace, the burner, as a high-temperature heat source, transfers heat to the furnace in the form of "thermal convection" and "radiation". The furnace also generates background radiation to the burner. This background radiation increases as the furnace temperature rises. At a high temperature, even the burner metal framework made of a heat-resistant alloy undergoes "creep". This deformation is irreversible.
(2) The structure of a porous medium burner typically involves a combination of "heat-resistant metal framework + heat-insulating material support" that confines the porous medium within the burner. This design determines that the heat at a high furnace temperature can be transferred along the metal framework of the burner. As a result, the metal wall surface of the premixing chamber where mixed combustion gas enters has an excessively high temperature and runs the risk of flareback.

Therefore, in terms of a burner based on the porous medium combustion technology in the related art, the part of the burner facing the furnace is typically a metal frame. After working for a long time, the frame undergoes various degrees of deformation. Such metal frame may lead to a serious consequence in a high-temperature scenario, so the burner cannot be used in a high-temperature furnace. To address the problem that a porous medium burner of the related art can be applied to only a low or medium furnace temperature and mostly applied to only a low furnace temperature and to broaden the application scope to a high-temperature field, the present application provides a porous medium burner applicable to a high furnace temperature environment whose original structure with a metal skeleton with cooling function is protected.

Additionally, limited by the characteristics of "premixed combustion" and "porous medium combustion", in the related art, the power adjustment ratio of a porous medium burner (the ratio of the maximum power to the minimum power for a stable operation of the burner) is typically fixed or has a narrow adjustment range. In other words, the gas flow rate remains constant, also limiting the applicability of the burner.

In the related art, the methods and characteristics of power adjustment of a thermal apparatus based on a porous medium burner are as follows:
(1) Gas combustion requires a certain amount of air. The air-fuel ratio is the ratio of air to gas, and the ratio of the two is usually fixed. By making minor adjustments to the amount of air (the air-fuel ratio), it is possible to adjust the power of an individual burner. However, the range of variation in burner power output is very narrow. Decreasing the amount of air can lead to incomplete combustion of the gas, thereby resulting in the production of toxic CO gas.
(2) The heater group is composed of multiple burner modules. The burner modules are turned on or off so that the power output of the heater group is performed. However, temperature distribution of a single heater group is non-uniform; consequently, temperature distribution of a thermal device is non-uniform, and a uniform temperature field cannot be established.

Therefore, it is required to improve the adjustment capability of a burner from a design perspective of the burner to solve the problem of fixed power and small power adjustment ratio of the burner in related technologies.

The infrared burner 210 of this embodiment includes a housing. The housing has a chamber, an air inlet 2112 and a heat release port 2113, the air inlet 2112 connected to the chamber, and the heat release port 2113 connected to the chamber. A premixing area 2115, an anti-flashback area 218, and a combustion area 219 are disposed in sequence in the chamber along the air inlet direction from the air inlet 2112 to the heat release port 2113.

The housing includes an inner cylinder 2114 and a cover plate 2111 having an air inlet 2112. The air inlet 2112 is configured to input mixed combustion gas formed of gas and combustion-support air. One or more air inlets 2112 may be provided. For example, two or three air inlets 2112 may be provided. The cover plate 2111 is disposed at one end of the inner cylinder 2114 to form the chamber. In this embodiment, the housing is made of metal, the space in the inner cylinder 2114 is cylindrical, the housing and the cover plate 2111 are square, one air inlet 2112 is provided, and is located at the center of the cover plate 2111, and the inner cylinder 2114 is fastened to the cover plate 2111 by a flange and a sealing gasket.

The main function of the premixing area 2115 is to mix and disperse the mixed combustion gas formed of gas and air entering through the air inlet 2112 so that the mixed combustion gas is further mixed and dispersed before uniformly entering the anti-flashback area 218. A gas distribution plate having distribution holes is disposed in the premixing area 2115. The gas distribution plate is connected to the housing. The orthographic projection of the air inlet 2112 is located on the gas distribution plate. In this embodiment, the orthographic projection is a projection along an air inlet direction, and the orthographic projection of the air inlet 2112 is located at the center of the gas distribution plate. After passing through the gas distribution holes of the gas distribution plate, the mixed combustion gas can be evenly distributed to the premixing area 2115 and then evenly distributed to a porous medium material layer 214 through the gas channels of a heat-insulating material layer so that the mixed gas can be uniformly burned in the porous medium material layer 214, thereby improving the uniformity of combustion and heating.

The main function of the anti-flashback area 218 is to separate the premixing area 2115 from the combustion area 219 to prevent flareback. The anti-flashback area 218 is filled with a heat-insulating material layer with gas channels. The heat-insulating material layer further fully mixes and uniformly distributes the mixed combustion gas entering from the premixing area 2115, and then conveys the mixed combustion gas to the combustion area 219 for combustion. The heat-insulating material layer has gas channels. The thickness of the heat-insulating material layer along the air inlet direction ranges from 100 mm to 200 mm. In general, the heat-insulating material layer consists of at least two layers of heat-insulating material plates 213 arranged in a stacked manner along the air inlet direction. The thickness of a single layer of heat-insulating material plate 213 ranges from 50 mm to 100 mm. Gas channels of any two adjacent layers of heat-insulating material plates 213 are correspondingly interconnected to form complete gas channels. In this embodiment, the heat-insulating material layer consists of two layers of heat-insulating material plates 213. The gas channels of the two layers of heat-insulating material plates 213 are interconnected to form complete gas channels. The complete gas channels run along the air inlet direction and are arranged at the center of the heat-insulating material layer.

By machining through holes in the thickness direction of the heat-insulating material layer, the premixed gas is allowed to enter the porous medium material through these through holes. On the one hand, uniform distribution of airflow is required to be achieved by the through holes. On the other hand, the diameter and number of the through holes need to satisfy related combustion rules. In embodiments of the present application, the aperture ratio for gas channels on the heat-insulating material layer is 1% to 5%.

The heat-insulating material layer is composed of refractory material capable of withstanding temperatures from 900°C to 1400°C, such as a ceramic plate, and may be selected according to actual requirements. This is not limited here. The diameter of each gas channel in the heat-insulating material layer ranges from 1.5 mm to 4 mm. This is not limited. In this embodiment, the diameter of each gas channel in the heat-insulating material layer is 3 mm. Moreover, the depth-to-diameter ratio of each gas channel is relatively large, typically 30:1 to 80:1, to enhance the anti-flashback effect.

When the depth-to-diameter ratio (depth/diameter) of each gas channel in the heat-insulating material layer of the anti-flash back area 218 is large enough, it is possible to decrease the gas and air simultaneously or increase the gas and gas simultaneously to adjust the power of the burner. A larger depth-to-diameter ratio can increase the pressure of the mixed combustion gas, so that the gas flow rate is higher than the flame propagation speed without worrying about the occurrence of tempering phenomenon, and at the same time, high combustion efficiency and low pollution emission can be achieved.

The main function of the combustion area 219 is combustion. A porous medium material layer 214 is disposed in the combustion area 219. The gas channels of the heat-insulating material layer communicate with both the premixing area 2115 and the porous medium material layer 214. The porous medium material layer 214 is configured to receive and burn the mixed combustion gas mixed and dispersed in the heat-insulating material layer. The temperature of the opposite side contacting with the premixing area 2115 of the heat-insulating material layer is lower than the ignition point of the combustion gas. In this embodiment, the porous medium material layer 214 is disposed in the central area of the heat-insulating material layer. The porous medium material layer 214 has a combustion surface facing the heat release port 2113 and configured to output gas and heat. There is a certain distance between the combustion surface and the heat release port 2113. A heat-insulating material support layer 2153 configured to support heat-insulating material is provided at a position (combustion area 219) in the chamber facing the heat release port 2113. The heat-insulating material support layer 2153 has a heat release channel corresponding to the porous medium layer 214. The heat release channel communicates with the heat release port 2113.

The material of the porous medium material layer 214 includes, but is not limited to, silicon carbide (SiC). SiC has a radiation rate of about 0.9, much higher than that of a general metal alloy heating material, leading to a better radiation heating effect. Of course, the material of the porous medium material layer 214 may be another refractory material, without limitation here. The structure of the porous medium material layer 214 includes, but is not limited to, a foam structure, a honeycomb structure, or an array structure.

The porosity of the porous medium material layer 214 is between 50% and 90%. Based on this, the thickness of the porous medium material layer 214 is controlled between 15 mm and 30 mm.

By controlling key data of the heat-insulating material layer and the porous medium material layer 214, the adjustment ratio of the burner is achieved from very small to a high range of 1:1 to 5:1.

According to the preceding description, the background radiation of the furnace at a high temperature is quite strong. This means that the radiation power from the furnace to the burner is also considerable. This part of radiation power to the burner is as follows: the side of the burner facing the furnace withstands high temperature and heat input. As the housing of the burner mostly uses a heat-resistant steel frame, the excellent thermal conductivity of steel determines the rapid transfer of heat throughout the metal frame of the burner. Even if the metal frame of the burner is made of heat-resistant alloy materials, the metal undergoes "creep" at a high temperature. This deformation is irreversible. Moreover, the high-temperature environment can weaken the heat insulation effect of the anti-flashback area 218, thereby reducing the anti-flashback effect. Therefore, it is necessary to maintain the overall temperature of the housing (metal frame) and the anti-flashback area 218 at a controlled level.

To control the overall temperature of the housing, a cooling interlayer 212 for receiving a cooling medium is disposed around the housing, and the cooling interlayer 212 at least wraps part of the premixing area 2115, part of the anti-flashback area 218, and part of the combustion area 219. In an embodiment, an outer cylinder 2121 is sleeved on the inner cylinder 2114, and a cooling interlayer 212 is formed between the inner cylinder 2114 and the outer cylinder 2121. In this embodiment, the inner cylinder 2114 and the outer cylinder 2121 are each cylindrical. The outer cylinder 2121 wraps most of the premixing area 2115 of the inner cylinder 2114, the entire anti-flashback area 218, and most of the combustion area 219, and only does not wrap areas at the top and bottom of the inner cylinder 2114. The two ends of the outer cylinder 2121 are each welded to the inner cylinder 2114 by a sealing plate.

**In the working** process of the burner, an air-gas mixture obtained before entering the burner or an air-gas mixture mixed in the premixing area 2115 pauses in the premixing area 2115 for a short time and then enters the porous medium material layer 214 through the gas channel of the heat-insulating material layer so as to be burned. As a container for combustible gases, it is necessary to ensure that the temperature at any point in the premixing area 2115 is not too high; otherwise, a combustion phenomenon, namely flashback, will occur in the premixing area 2115.

To promptly cool down the premixing area 2115, the cooling interlayer 212 is provided with a cooling inlet 2122 and a cooling outlet 2123 of the cooling medium. The cooling inlet 2122 and the cooling outlet 2123 are adjacent to the air inlet 2112.

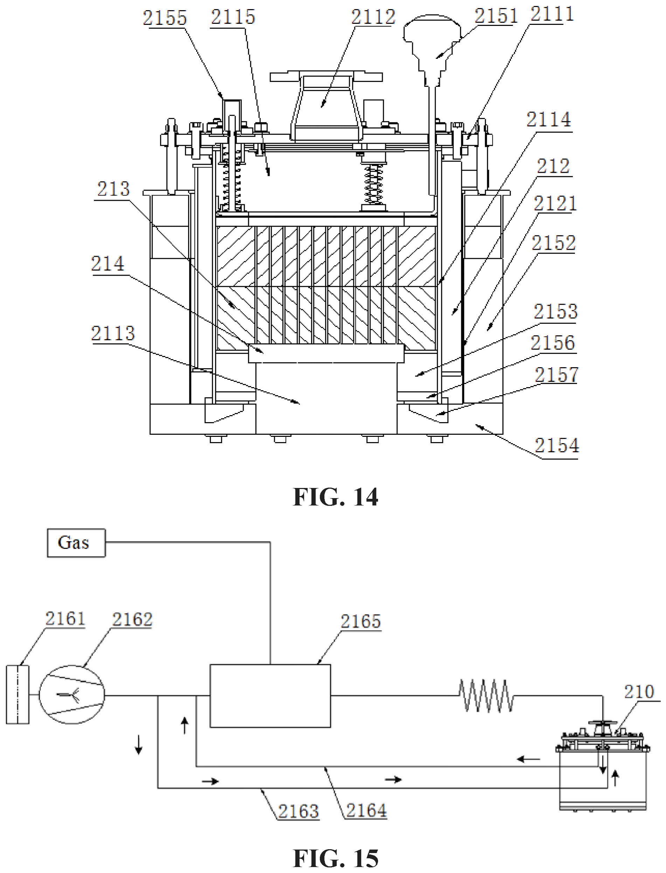

In the present application, different cooling media are selected according to different furnace temperature requirements. In an embodiment, the furnace temperature is required to be below 700 °C, and gas is used as the cooling medium. Referring to FIG. 15, the infrared burner 210 also includes a combustion-supporting air duct 2161 communicating with the air inlet 2112. The combustion-supporting air duct 2161 is connected to the air-gas mixer 2165 by a combustion-supporting fan 2162 and is configured to lead air from the combustion-supporting air duct 2161 into the air-gas mixer 2165. Gas is also led into the air-gas mixer 2165 so as to be mixed with the air. The obtained premixed gases enter the chamber of the burner through the air inlet 2112. The combustion-supporting air duct 2161 communicates with the cooling inlet 2122 by a first branch 2163 and communicates with the cooling outlet 2123 by a second branch 2164. The connection point between the first branch 2163 and the combustion-supporting air duct 2161 and the connection point between the second branch 2164 and the combustion-supporting air duct 2161 are located between the combustion-supporting fan 2162 and the air-gas mixer 2165. The connection point between the second branch 2164 and the combustion-supporting air duct 2161 is closer to the air-gas mixer 2165 and the air inlet 2112 than the connection point between the first branch 2163 and the combustion-supporting air duct 2161. The low-temperature combustion-supporting air enters the cooling inlet 2122 through the first branch 2163 and exchanges heat with the inner cylinder 2114 in the cooling interlayer 212. The heated combustion-supporting air is then discharged into the second branch 2164 through the cooling outlet 2123. Since the connection point between the second branch 2164 and the combustion-supporting air duct 2161 is closer to the air-gas mixer 2165, the heated combustion-supporting air enters the air-gas mixer 2165. In this manner, gas can be preheated in the process of mixing air and gas.

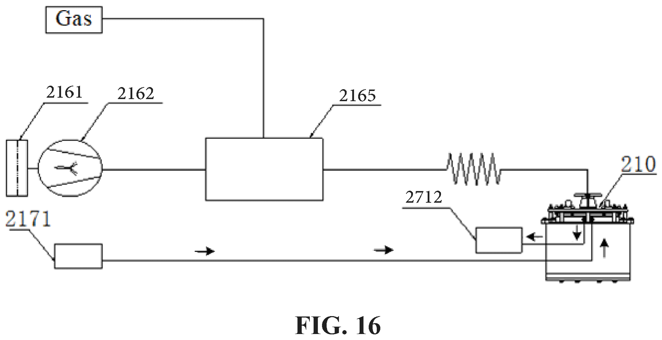

In an embodiment, when a furnace temperature of 700°C to 1150°C is required and when the furnace temperature is in the high-temperature range greater than 1000°C, a liquid cooling technology should be used. The cooling medium may be water or oil to achieve stable control of the overall temperature of the burner housing. Referring to FIG. 16, the functions of forming premixed gas and feeding into the burner are retained by a structure such as an air-gas mixer 2165, and the infrared burner 210 also includes a cooling water tank 2171 and a hot water tank 2712. The cooling water tank 2171 communicates with the cooling inlet 2122. The hot water tank 2712 communicates with the cooling outlet 2123.

During the operation of the burner, due to the different thermal conductivities of materials, heat conducted from the heat-insulating material plate 213 to the inner cylinder 2114 is cooled by the cooling medium in the cooling interlayer 212, thus avoiding deformation of the housing of the burner at a high temperature. At the same time, a difficulty in achieving a high adjustment ratio is to prevent flashback when the mixed combustion gas flows at a low speed, ensuring that the flow rate of the mixed combustion gas is always higher than the flame propagation speed. The contact surface between the heat-insulating material plate 213 and the porous medium material layer 214 is maintained at a low temperature, and the temperature is lower than the ignition point of the gas. When the power of the burner is reduced by reducing the flow rate of the mixed combustion gas, the low temperature can reduce the flame propagation speed. Even if the flow rate of the mixed combustion gas is small, the anti-flashback effect can be maintained, thereby increasing the adjustment ratio of the burner.

To ensure real-time monitoring of the temperature of the premixing area 2115, the glass tempering furnace also includes a thermocouple 2151 inserted in the premixing area 2115. The probe end of thermocouple 2151 is adjacent to the inner wall of the premixing area 2115.

For heat insulation and heat preservation of the housing, a heat preservation material layer 2152 is disposed around the cooling interlayer 212.

To support the housing, the infrared burner 210 also includes a bottom heat-insulating panel 2154 for supporting the housing and the cooling interlayer 212. The bottom heat-insulating panel 2154 has a heat release hole corresponding to the heat release port 2113, which does not affect the dissipation of heat.

A bottom panel 2156 made of metal is generally provided below the heat-insulating material support layer 2153 of the burner, there is typically a metal for support. The bottom panel 2156 facing a high temperature inside the furnace is heated to expand and produce a high temperature creep effect. This may cause the bottom panel 2156 to warp. Once the deformation is excessive, the heat-insulating material support layer 2153 is damaged by the force caused by the deformation, causing the porous medium material layer 214 carried on the heat-insulating material support layer 2153 to become unstable. Therefore, a stiffener 2157 is added in this embodiment to weld and reinforce the bottom panel 2156 of the burner. One part of the stiffener 2157 is welded to the inner cylinder 2114, and the other part of the stiffener 2157 is welded to the bottom panel 2156.

In this embodiment, the heat-insulating material layer is closely adhered to the porous medium material layer 214. A pressing mechanism 2155 arranged along the air inlet direction is disposed in the premixing area 2115. A first end of the pressing mechanism 2155 is connected to the housing. A second end of the pressing mechanism 2155 abuts against the heat-insulating material layer and presses the heat-insulating material layer to ensure that the heat-insulating material layer remains tightly adhered to the porous medium material layer 214. Three pressing mechanisms 2155 are provided. The three pressing mechanisms 2155 are equally spaced apart around the axis of the housing. In an embodiment, four pressing mechanisms 2155 are provided. The four pressing mechanisms 2155 are disposed at the four corners of the housing. The pressing mechanism 2155 enables the heat-insulating material layer to be always tightly adhered to the porous medium material layer 214, avoiding gaps between the heat-insulating material layer and the porous medium material layer 214 due to thermal expansion of the burner in a working process, and thus avoiding poor combustion caused by rapid heat diffusion due to the gaps.

The working process of each infrared burner 210 is as follows:
The premixed gas of the combustion-supporting air and the gas enters the chamber through the air inlet 2112 and stops in the premixing area 2115 for a short time. The premixed gas is mixed in a turbulent manner in the premixing area 2115 while cooling the surrounding wall to a certain extent.

Premixed gas enters the porous medium material layer 214 along gas channel in the heat-insulating material layer and completes combustion in the porous medium material layer 214. Since gas is ignited in the beginning, as premixed gas enters continuously, the combustion process in the porous medium material layer 214 continues, and the porous medium material in the normal working state presents an infrared state.

The cooling medium enters the inner cylinder 2114 through the cooling inlet 2122, moves one circle around the inner cylinder 2114 in the cooling layer 212 and is discharged through the cooling outlet 2123 to control the overall temperature of the housing. The thermocouple 2151 monitors the temperature of the premixing area 2115 in real time to evaluate the cooling effect of the cooling medium.

In the description of the specification, the description of reference terms such as "some embodiments" and "other embodiments" is intended to mean that features, structures, materials, or characteristics described in conjunction with such embodiments or examples are included in at least one embodiment or example of the present application. In the specification, the illustrative description of these terms does not necessarily refer to the same embodiment or example. Moreover, the described features, structures, materials, or characteristics may be combined in an appropriate manner in one or more embodiments or examples.

## Claims

1. A glass tempering furnace, comprising:
a preheating furnace section (100) having a feed port, wherein a general smoke vent (120) is disposed at the feed port, and the preheating furnace section (100) is divided into a plurality of sections along a glass traveling direction, wherein each of the plurality of sections has a smoke suction port (130), a smoke ejection port (140) and a smoke suction fan, wherein a suction port of the smoke suction fan is connected to the smoke suction port (130);
a heating furnace section (200) provided with a plurality of infrared burners (210), wherein each of the plurality of infrared burners (210) is a porous medium burner, the preheating furnace section (100) is configured to suck smoke of the heating furnace section (200) from the smoke suction port (130) through the suction port of the smoke suction fan and deliver the sucked smoke to the preheating furnace section (100) through the smoke ejection port (140), so that a pressure in the heating furnace section (200) is greater than a pressure in the preheating furnace section (100); and
a soaking furnace section (300) disposed after the heating furnace section (200) along the glass traveling direction, wherein a plurality of air ducts (310) are disposed in the soaking furnace section (300) and configured to generate horizontally parallel airflow on upper and lower surfaces of glass.

2. The glass tempering furnace of claim 1, further comprising a plurality of drive rollers (101) passing through the preheating furnace section (100), the heating furnace section (200), and the soaking furnace section (300) in sequence, wherein
a plurality of smoke ejection air knives (150) are disposed on upper and lower sides of the plurality of drive rollers (101) in the preheating furnace section (100) along the glass traveling direction, the plurality of smoke ejection air knives (150) are staggered with the plurality of drive rollers (101) in a height direction, and the smoke ejection port (140) is configured to deliver the sucked smoke to the plurality of smoke ejection air knives (150).

3. The glass tempering furnace of claim 2, wherein a diameter of an air knife outlet (153) of each of the plurality of smoke ejection air knives (150) is contracted.

4. The glass tempering furnace of claim 3, wherein an incrementer (160) is disposed in the preheating furnace section (100), the incrementer (160) has a Venturi channel (161), and the Venturi channel (161) is connected to the air knife outlet (153) of each of the plurality of smoke ejection air knives (150).

5. The glass tempering furnace of claim 1, wherein the plurality of infrared burners (210) are staggered on upper and lower sides of a plurality of drive rollers (101) along the glass traveling direction.

6. The glass tempering furnace of claim 5, wherein airflow stirring devices (220) are disposed in the heating furnace section (200) and spaced from the plurality of infrared burners (210) along the glass traveling direction.

7. The glass tempering furnace of any one of claims 1 to 6, wherein each of the plurality of air ducts has air outlets (313) and air suction ports (314), wherein the air outlets (313) are respectively disposed above and below the plurality of drive rollers (101) and at a first end of the drive roller (101) along a radial direction of the drive rollers (101) to enable air blown out from the air outlet (313) to reach the first end of the drive roller (101), blow out from a gap between adjacent drive rollers (101), and blow over the upper and lower surfaces of the glass along a direction parallel to the drive rollers (101);
wherein the air suction ports (314) are respectively disposed above and below the drive rollers (101) and adjacent to a second end of the drive rollers (101) and each of the air suction ports (314) is configured to suck in the air blowing over the upper and lower surfaces of the glass.

8. The glass tempering furnace of claim 7, wherein each of the plurality of air ducts (310) comprises a centrifugal fan (311) and an air duct body, wherein the air duct body comprises an air-suction air duct section (3122) and an air-blowing air duct section (3121), and the centrifugal fan (311) is configured to rotate to suck air in and throw the air out to make the air flow in the air duct body;
a first end of the air-blowing air duct section (3121) is connected to an outlet of the centrifugal fan (311), and the air outlets (313) are disposed at a second end of the air-blowing air duct section (3121); and
a first end of the air-suction air duct section (3122) is connected to an inlet of the centrifugal fan (311), and the air suction ports (314) are disposed at a second end of the air-suction air duct section (3122).

9. The glass tempering furnace of claim 8, wherein the air-blowing air duct section (3121) comprises a first air duct portion (31211) and a second air duct portion (31212), wherein the first air duct portion (31211) is parallel to the drive rollers (101), the second air duct portion (31212) is perpendicular to the drive rollers (101), and the air outlets (313) are disposed on a sidewall surface of the second air duct portion (31212) facing the first end of the drive roller (101).

10. The glass tempering furnace of claim 8, wherein the soaking furnace section (300) further comprises a heater (320), the heater (320) is disposed below an impeller of the centrifugal fan (311) to enable air sucked in by rotation of the impeller to pass through the heater (320) and then to enter the impeller.

11. The glass tempering furnace of claim 10, wherein a heating part (321) of the heater (320) is disposed in the air-suction air duct section (3122).

12. The glass tempering furnace of claim 8, wherein the air suction ports (314) are disposed on a sidewall surface of the air-suction air duct section (3122) facing the second end of the drive roller (101).

13. The glass tempering furnace of any one of claims 1 to 12, wherein the preheating furnace section (100), the heating furnace section (200), and the soaking furnace section (300) are each divided into an upper furnace portion (330) and a lower furnace portion (340), wherein the upper furnace portion is disposed above the drive rollers (101), and the lower furnace portion (340) is disposed below the drive rollers (101).

14. The glass tempering furnace of any one of claims 1 to 13, wherein the porous medium burner comprises a housing, the housing has a chamber, an air inlet (2112) connected to the chamber, and a heat release port (2113) connected to the chamber; a premixing area (2115), an anti-flashback area (218), and a combustion area (219) are disposed in sequence in the chamber along an air inlet direction from the air inlet (2112) to the heat release port (2113);
wherein the anti-flashback area (218) is filled with a heat-insulating material layer, a porous medium material layer is disposed in the combustion area (219), and the heat-insulating material layer has a gas channel communicating with the premixing area (2115) and the porous medium material layer; and a cooling interlayer (212) for receiving a cooling medium is disposed around the housing, and the cooling interlayer (212) at least wraps part of the premixing area (2115), part of the anti-flashback area (218), and part of the combustion area (219).

15. The glass tempering furnace of claim 14, wherein the housing comprises an inner cylinder (2114) and a cover plate (2111) having the air inlet (2112), the cover plate (2111) covers one end of the inner cylinder (2114) to form the chamber, an outer cylinder (2121) is sleeved on the inner cylinder (2114), and the cooling interlayer (212) is formed between the inner cylinder (2114) and the outer cylinder (2121).

16. The glass tempering furnace of claim 14 or 15, wherein the cooling interlayer (212) has a cooling inlet (2122) and a cooling outlet (2123) for the cooling medium, wherein the cooling inlet (2122) and the cooling outlet (2123) are adjacent to the air inlet (2112).

17. The glass tempering furnace of claim 16, further comprising a combustion-supporting air duct (2161) communicating with the air inlet (2112), wherein the combustion-supporting air duct (2161) communicates with the cooling inlet (2122) by a first branch (2163), the combustion-supporting air duct (2161) communicates with the cooling outlet (2123) by a second branch (2164), and a connection point between the second branch (2164) and the combustion-supporting air duct (2161) is closer to the air inlet (2112) than a connection point between the first branch (2163) and the combustion-supporting air duct (2161).

18. The glass tempering furnace of claim 16, further comprising a cooling water tank (2171) and a hot water tank (2712), wherein the cooling water tank (2171) communicates with the cooling inlet (2122), and the hot water tank (2712) communicates with the cooling outlet (2123).

19. The glass tempering furnace of claim 14, wherein the porous medium burner is set in at least one of the following manners:
a heat preservation material layer (2152) is disposed around the cooling interlayer (212);
a heat-insulating material support layer (2153) for supporting the heat-insulating material layer is disposed in the chamber and adjacent to the heat release port (2113) and has a heat release channel corresponding to the porous medium material layer, wherein the heat release channel communicates with the heat release port (2113);
the glass tempering furnace further comprises a bottom heat-insulating panel (2154) for supporting the housing, wherein the bottom heat-insulating panel (2154) has a heat release hole corresponding to the heat release port (2113); or
the glass tempering furnace further comprises a thermocouple inserted in the premixing area (2115).

20. The glass tempering furnace of claim 14, wherein a depth-to-diameter ratio of the gas channel of the heat-insulating material layer is 30:1 to 80:1.

21. A glass tempering method, applied to the glass tempering furnace of any one of claims 1 to 20, and comprising:
manually or automated device laying the glass in a single layer of glass on a material layout platform to place products;
carrying the glass on a plurality of drive rollers (101) to the preheating furnace section (100) and preheating the glass in the preheating furnace section (100);
carrying the glass to the heating furnace section (200) and heating the glass in the heating furnace section (200) to a set temperature of 600°C to 640°C; and
carrying the glass from the heating furnace section (200) to the soaking furnace section (300) and heating the glass and homogenizing a temperature of the glass by circulating gas sweeping across the upper and lower surfaces of the glass.

## Patentansprüche

1. Glasvorspannofen, umfassend:
einen Vorheizofenabschnitt (100), aufweisend eine Beschickungsöffnung, wobei ein allgemeiner Rauchabzug (120) an der Beschickungsöffnung angeordnet ist und der Vorheizofenabschnitt (100) in eine Vielzahl von Abschnitten entlang einer Glastransportrichtung unterteilt ist, wobei jeder der Vielzahl von Abschnitten eine Rauchansaugöffnung (130), eine Rauchaustrittsöffnung (140) und einen Rauchabsaugventilator aufweist, wobei eine Ansaugöffnung des Rauchabsaugventilators mit der Rauchansaugöffnung (130) verbunden ist;
einen Heizofenabschnitt (200), der mit einer Vielzahl von Infrarotbrennern (210) versehen ist, wobei jeder der Vielzahl von Infrarotbrennern (210) ein Brenner mit porösem Medium ist, der Vorheizofenabschnitt (100) ausgelegt ist, um Rauch des Heizofenabschnitts (200) aus der Rauchansaugöffnung (130) durch die Ansaugöffnung des Rauchabsaugventilators anzusaugen und den angesaugten Rauch dem Vorheizofenabschnitt (100) durch die Rauchaustrittsöffnung (140) zuzuführen, sodass ein Druck in dem Heizofenabschnitt (200) größer ist als ein Druck in dem Vorheizofenabschnitt (100), und
einen Halteofenabschnitt (300), der nach dem Heizofenabschnitt (200) entlang der Glastransportrichtung angeordnet ist, wobei eine Vielzahl von Luftleitungen (310) in dem Halteofenabschnitt (300) angeordnet und ausgelegt ist, um horizontal eine parallele Luftströmung auf obere und untere Glasoberflächen zu erzeugen.

2. Glasvorspannofen nach Anspruch 1, ferner umfassend eine Vielzahl von Antriebswalzen (101), die nacheinander durch den Vorheizofenabschnitt (100), den Heizofenabschnitt (200) und den Halteofenabschnitt (300) führen, wobei
eine Vielzahl von Rauchaustrittsluftmessern (150) auf oberen und unteren Seiten der Vielzahl von Antriebswalzen (101) in dem Vorheizofenabschnitt (100) entlang der Glastransportrichtung angeordnet ist, die Vielzahl von Rauchaustrittsluftmessern (150) zu der Vielzahl von Antriebswalzen (101) in einer Höhenrichtung versetzt angeordnet sind und die Rauchaustrittsöffnung (140) ausgelegt ist, um den angesaugten Rauch der Vielzahl von Rauchaustrittsluftmessern (150) zuzuführen.

3. Glasvorspannofen nach Anspruch 2, wobei ein Durchmesser eines Luftmesserauslasses (153) eines jeden der Vielzahl von Rauchaustrittsluftmessern (150) verengt ist.

4. Glasvorspannofen nach Anspruch 3, wobei ein Incrementer (160) in dem Vorheizofenabschnitt (100) angeordnet ist, der Incrementer (160) einen Venturi-Kanal (161) aufweist und der Venturi-Kanal (161) mit dem Luftmesserauslass (153) eines jeden der Vielzahl von Rauchaustrittsluftmessern (150) verbunden ist.

5. Glasvorspannofen nach Anspruch 1, wobei die Vielzahl von Infrarotbrennern (210) auf oberen und unteren Seiten der Vielzahl von Antriebswalzen (101) entlang der Glastransportrichtung versetzt angeordnet ist.

6. Glasvorspannofen nach Anspruch 5, wobei Luftströmungsumwälzvorrichtungen (220) in dem Heizofenabschnitt (200) angeordnet und von der Vielzahl von Infrarotbrennern (210) entlang der Glastransportrichtung beabstandet sind.

7. Glasvorspannofen nach einem der Ansprüche 1 bis 6, wobei jede der Vielzahl von Luftleitungen Luftauslässe (313) und Luftansaugöffnungen (314) aufweist, wobei die Luftauslässe (313) jeweils oberhalb und unterhalb der Vielzahl von Antriebswalzen (101) und an einem ersten Ende der Antriebswalze (101) entlang einer radialen Richtung der Antriebswalzen (101) angeordnet sind, um zu ermöglichen, dass Luft aus dem Luftauslass (313) ausgeblasen wird, um das erste Ende der Antriebswalze (101) zu erreichen, aus einem Spalt zwischen benachbarten Antriebswalzen (101) ausgeblasen wird und über die oberen und unteren Oberflächen des Glases entlang einer Richtung parallel zu den Antriebswalzen (101) geblasen wird,
wobei die Luftansaugöffnungen (314) jeweils oberhalb und unterhalb der Antriebswalzen (101) und angrenzend an ein zweites Ende der Antriebswalzen (101) angeordnet sind und jede der Luftansaugöffnungen (314) ausgelegt ist, um die über die oberen und unteren Oberflächen des Glases geblasene Luft anzusaugen.

8. Glasvorspannofen nach Anspruch 7, wobei jede der Vielzahl von Luftleitungen (310) einen Zentrifugalventilator (311) und einen Luftleitungskörper umfasst, wobei der Luftleitungskörper einen Luftansaugluftleitungsabschnitt (3122) und einen Luftblasluftleitungsabschnitt (3121) umfasst und der Zentrifugalventilator (311) ausgelegt ist, um sich zu drehen und Luft anzusaugen und die Luft auszublasen, um zu bewirken, dass die Luft in dem Luftleitungskörper strömt,
wobei ein erstes Ende des Luftblasluftleitungsabschnitts (3121) mit einem Auslass des Zentrifugalventilators (311) verbunden ist und die Luftauslässe (313) an einem zweiten Ende des Luftblasluftleitungsabschnitts (3121) angeordnet sind und
ein erstes Ende des Luftansaugluftleitungsabschnitts (3122) mit einem Einlass des Zentrifugalventilators (311) verbunden ist und die Luftansaugöffnungen (314) an einem zweiten Ende des Luftansaugluftleitungsabschnitts (3122) angeordnet sind.

9. Glasvorspannofen nach Anspruch 8, wobei der Luftblasluftleitungsabschnitt (3121) einen ersten Luftleitungsteilabschnitt (31211) und einen zweiten Luftleitungsteilabschnitt (31212) umfasst, wobei der erste Luftleitungsteilabschnitt (31211) parallel zu den Antriebswalzen (101) ist, der zweite Luftleitungsteilabschnitt (31212) senkrecht zu den Antriebswalzen (101) ist und die Luftauslässe (313) auf einer Seitenwandoberfläche des zweiten Luftleitungsteilabschnitts (31212) angeordnet und dem ersten Ende der Antriebswalze (101) zugewandt sind.

10. Glasvorspannofen nach Anspruch 8, wobei der Halteofenabschnitt (300) ferner eine Heizvorrichtung (320) umfasst, die Heizvorrichtung (320) unterhalb eines Laufrads des Zentrifugalventilators (311) angeordnet ist, um zu ermöglichen, dass durch die Drehung des Laufrads angesaugte Luft durch die Heizvorrichtung (320) geführt wird und dann in das Laufrad eintritt.

11. Glasvorspannofen nach Anspruch 10, wobei ein Heizungsteil (321) der Heizvorrichtung (320) in dem Luftansaugluftleitungsabschnitt (3122) angeordnet ist.

12. Glasvorspannofen nach Anspruch 8, wobei die Luftansaugöffnungen (314) auf einer Seitenwandoberfläche des Luftansaugluftleitungsabschnitts (3122) dem zweiten Ende der Antriebswalze (101) zugewandt angeordnet sind.

13. Glasvorspannofen nach einem der Ansprüche 1 bis 12, wobei der Vorheizofenabschnitt (100), der Heizofenabschnitt (200) und der Halteofenabschnitt (300) jeweils in einen oberen Ofenteilabschnitt (330) und einen unteren Ofenteilabschnitt (340) unterteilt sind, wobei der obere Ofenteilabschnitt oberhalb der Antriebswalzen (101) angeordnet ist und der untere Ofenteilabschnitt (340) unterhalb der Antriebswalzen (101) angeordnet ist.

14. Glasvorspannofen nach einem der Ansprüche 1 bis 13, wobei der Brenner mit porösem Medium ein Gehäuse umfasst, das Gehäuse eine Kammer aufweist, ein Lufteinlass (2112) mit der Kammer verbunden ist und eine Wärmefreisetzungsöffnung (2113) mit der Kammer verbunden ist, wobei ein Vormischbereich (2115), ein Rückschlagsicherungsbereich (218) und ein Verbrennungsbereich (219) nacheinander in der Kammer entlang einer Lufteinlassrichtung von dem Lufteinlass (2112) zu der Wärmefreisetzungsöffnung (2113) angeordnet sind,
wobei der Rückschlagsicherungsbereich (218) mit einer wärmedämmenden Materialschicht gefüllt ist, eine Materialschicht mit porösem Medium in dem Verbrennungsbereich (219) angeordnet ist und die wärmedämmende Materialschicht einen Gaskanal aufweist, der mit dem Vormischbereich (2115) und der Materialschicht mit porösem Medium kommuniziert, und eine Kühlzwischenschicht (212) zur Aufnahme eines Kühlmediums um das Gehäuse herum angeordnet ist und die Kühlzwischenschicht (212) mindestens einen Teil des Vormischbereichs (2115), einen Teil des Rückschlagsicherungsbereichs (218) und einen Teil des Verbrennungsbereichs (219) umhüllt.

15. Glasvorspannofen nach Anspruch 14, wobei das Gehäuse einen inneren Zylinder (2114) und eine Abdeckplatte (2111), aufweisend einen Lufteinlass (2112) umfasst, die Abdeckplatte (2111) ein Ende des inneren Zylinders (2114) bedeckt, um die Kammer zu bilden, ein äußerer Zylinder (2121) auf den inneren Zylinder (2114) aufgezogen ist und die Kühlzwischenschicht (212) zwischen dem inneren Zylinder (2114) und dem äußeren Zylinder (2121) gebildet ist.

16. Glasvorspannofen nach Anspruch 14 oder 15, wobei die Kühlzwischenschicht (212) einen Kühleinlass (2122) und einen Kühlauslass (2123) für das Kühlmedium umfasst, wobei der Kühleinlass (2122) und der Kühlauslass (2123) an den Lufteinlass (2112) angrenzen.

17. Glasvorspannofen nach Anspruch 16, ferner umfassend eine verbrennungsunterstützende Luftleitung (2161), die mit dem Lufteinlass (2112) kommuniziert, wobei die verbrennungsunterstützende Luftleitung (2161) mit dem Kühleinlass (2122) durch einen ersten Abzweig (2163) kommuniziert, die verbrennungsunterstützende Luftleitung (2161) mit dem Kühlauslass (2123) durch einen zweiten Abzweig (2164) kommuniziert und ein Verbindungspunkt zwischen dem zweiten Abzweig (2164) und der verbrennungsunterstützenden Luftleitung (2161) näher an dem Lufteinlass (2112) ist als ein Verbindungspunkt zwischen dem ersten Abzweig (2163) und der verbrennungsunterstützenden Luftleitung (2161).

18. Glasvorspannofen nach Anspruch 16, ferner umfassend einen Kühlwassertank (2171) und einen Heißwassertank (2712), wobei der Kühlwassertank (2171) mit dem Kühleinlass (2122) kommuniziert und der Heißwassertank (2712) mit dem Kühlauslass (2123) kommuniziert.

19. Glasvorspannofen nach Anspruch 14, wobei der Brenner mit porösem Medium auf mindestens eine der folgenden Weisen eingestellt ist:
eine Wärmeerhaltungsmaterialschicht (2152) ist um die Kühlzwischenschicht (212) herum angeordnet;
eine wärmedämmende Materialträgerschicht (2153) zum Tragen der wärmedämmenden Materialschicht ist in der Kammer und angrenzend an die Wärmefreisetzungsöffnung (2113) angeordnet und weist einen Wärmefreisetzungskanal auf, der der Materialschicht mit porösem Medium entspricht, wobei der Wärmefreisetzungskanal mit der Wärmefreisetzungsöffnung (2113) kommuniziert;
der Glasvorspannofen umfasst ferner eine unterseitige Wärmedämmplatte (2154) zum Tragen des Gehäuses, wobei die unterseitige Wärmedämmplatte (2154) ein Wärmefreisetzungsloch aufweist, das der Wärmefreisetzungsöffnung (2113) entspricht, oder
der Glasvorspannofen umfasst ferner ein Thermoelement, das in den Vormischbereich (2115) eingesetzt ist.

20. Glasvorspannofen nach Anspruch 14, wobei ein Tiefe-zu-DurchmesserVerhältnis des Gaskanals der wärmedämmenden Materialschicht 30:1 bis 80:1 beträgt.

21. Glasvorspannverfahren, angewandt auf den Glasvorspannofen nach einem der Ansprüche 1 bis 20 und umfassend:
Legen des Glases von Hand oder mittels einer automatischen Vorrichtung in einer einzelnen Glasschicht auf eine Materialauslegeplattform zum Platzieren von Produkten;
Transportieren des Glases auf einer Vielzahl von Antriebswalzen (101) zu dem Vorheizofenabschnitt (100) und Vorheizen des Glases in dem Vorheizofenabschnitt (100);
Transportieren des Glases zu dem Heizofenabschnitt (200) und Erhitzen des Glases in dem Heizofenabschnitt (200) auf eine Solltemperatur von 600 °C bis 640 °C und
Transportieren des Glases von dem Heizofenabschnitt (200) zu dem Halteofenabschnitt (300) und Erhitzen des Glases und Homogenisieren einer Temperatur des Glases, indem ein zirkulierendes Gas über die oberen und unteren Oberflächen des Glases streicht.

## Revendications

1. Four à tremper le verre, comprenant :
une section de four de préchauffage (100) présentant un port d'alimentation, dans lequel un évent de fumée général (120) est disposé au niveau du port d'alimentation, et la section de four de préchauffage (100) est divisée en une pluralité de sections le long d'une direction de déplacement de verre, dans lequel chacune de la pluralité de sections présente un port d'aspiration de fumée (130), un port d'éjection de fumée (140) et un ventilateur d'aspiration de fumée, dans lequel un port d'aspiration du ventilateur d'aspiration de fumée est raccordé au port d'aspiration de fumée (130) ;
une section de four de chauffage (200) pourvue d'une pluralité de brûleurs infrarouges (210), dans lequel chacun de la pluralité de brûleurs infrarouges (210) est un brûleur de milieu poreux, la section de four de préchauffage (100) est configurée pour aspirer la fumée de la section de four de chauffage (200) provenant du port d'aspiration de fumée (130) à travers le port d'aspiration du ventilateur d'aspiration de fumée et délivrer la fumée aspirée à la section de four de préchauffage (100) à travers le port d'éjection de fumée (140), de sorte qu'une pression dans la section de four de chauffage (200) est supérieure à une pression dans la section de four de préchauffage (100) ; et
une section de four de trempage (300) disposée après la section de four de chauffage (200) le long de la direction de déplacement du verre, dans lequel une pluralité de conduits d'air (310) est disposée dans la section de four de trempage (300) et configurée pour générer un flux d'air horizontalement parallèle sur des surfaces supérieure et inférieure du verre.

2. Four à tremper le verre selon la revendication 1, comprenant en outre une pluralité de rouleaux d'entraînement (101) passant à travers la section de four de préchauffage (100), la section de four de chauffage (200) et la section de four de trempage (300) en séquence, dans lequel une pluralité de lames d'air d'éjection de fumée (150) est disposée sur des côtés supérieurs et inférieurs de la pluralité de rouleaux d'entraînement (101) dans la section de four de préchauffage (100) le long de la direction de déplacement du verre, la pluralité de lames d'air d'éjection de fumée (150) sont échelonnées avec la pluralité de rouleaux d'entraînement (101) dans la direction de la hauteur, et le port d'éjection de fumée (140) est configuré pour délivrer la fumée aspirée à la pluralité de lames d'air d'éjection de fumée (150).

3. Four à tremper le verre selon la revendication 2, dans lequel un diamètre d'une sortie de lame d'air (153) de chacune de la pluralité de lames d'air d'éjection de fumée (150) est contracté.

4. Four à tremper le verre selon la revendication 3, dans lequel un incrémenteur (160) est disposé dans la section de four de préchauffage (100), l'incrémenteur (160) présente un canal Venturi (161), et le canal Venturi (161) est raccordé à la sortie de lame d'air (153) de chacun de la pluralité de lames d'air d'éjection de fumée (150).

5. Four à tremper le verre selon la revendication 1, dans lequel la pluralité de brûleurs infrarouges (210) sont échelonnés sur des côtés supérieurs et inférieurs d'une pluralité de rouleaux d'entraînement (101) le long de la direction de déplacement du verre.

6. Four à tremper le verre selon la revendication 5, dans lequel des dispositifs d'agitation de flux d'air (220) sont disposés dans la section de four de chauffage (200) et espacés de la pluralité de brûleurs infrarouges (210) le long de la direction de déplacement du verre.

7. Four à tremper le verre selon l'une quelconque des revendications 1 à 6, dans lequel chacun de la pluralité de conduits d'air présente des sorties d'air (313) et des ports d'aspiration d'air (314), dans lequel les sorties d'air (313) sont respectivement disposées au-dessus et au-dessous de la pluralité de rouleaux d'entraînement (101) et au niveau d'une première extrémité du rouleau d'entraînement (101) le long d'une direction radiale des rouleaux d'entraînement (101) pour permettre à l'air soufflé provenant de la sortie d'air (313) d'atteindre la première extrémité du rouleau d'entraînement (101), de souffler à partir d'un espace entre des rouleaux d'entraînement (101) adjacents, et de souffler sur les surfaces supérieure et inférieure du verre le long d'une direction parallèle aux rouleaux d'entraînement (101) ;
dans lequel les ports d'aspiration d'air (314) sont respectivement disposés au-dessus et au-dessous des rouleaux d'entraînement (101) et adjacents à une deuxième extrémité des rouleaux d'entraînement (101) et chacun des ports d'aspiration d'air (314) est configuré pour aspirer l'air soufflé sur les surfaces supérieure et inférieure du verre.

8. Four à tremper le verre selon la revendication 7, dans lequel chacun de la pluralité de conduits d'air (310) comprend un ventilateur centrifuge (311) et un corps de conduit d'air, dans lequel le corps de conduit d'air comprend une section de conduit d'air d'aspiration d'air (3122) et une section de conduit d'air de soufflage d'air (3121), et le ventilateur centrifuge (311) est configuré pour tourner afin d'aspirer de l'air dedans et projeter l'air vers l'extérieur pour amener l'air à s'écouler dans le corps de conduit d'air ;
une première extrémité de la section de conduit d'air de soufflage d'air (3121) est raccordée à une sortie du ventilateur centrifuge (311), et les sorties d'air (313) sont disposées au niveau d'une deuxième extrémité de la section de conduit d'air de soufflage d'air (3121) ; et
une première extrémité de la section de conduit d'air d'aspiration d'air (3122) est raccordée à une entrée du ventilateur centrifuge (311), et les ports d'aspiration d'air (314) sont disposés au niveau d'une deuxième extrémité de la section de conduit d'air d'aspiration d'air (3122).

9. Four à tremper le verre selon la revendication 8, dans lequel la section de conduit d'air de soufflage d'air (3121) comprend une première partie de conduit d'air (31211) et une deuxième partie de conduit d'air (31212), dans lequel la première partie de conduit d'air (31211) est parallèle aux rouleaux d'entraînement (101), la deuxième partie de conduit d'air (31212) est perpendiculaire aux rouleaux d'entraînement (101), et les sorties d'air (313) sont disposées sur une surface de paroi latérale de la deuxième partie de conduit d'air (31212) faisant face à la première extrémité du rouleau d'entraînement (101).

10. Four à tremper le verre selon la revendication 8, dans lequel la section de four de trempage (300) comprend en outre un dispositif de chauffage (320), le dispositif de chauffage (320) est disposé au-dessous d'une roue du ventilateur centrifuge (311) pour permettre à l'air aspiré par rotation de la roue de passer à travers le dispositif de chauffage (320) avant d'entrer dans la roue.

11. Four à tremper le verre selon la revendication 10, dans lequel une partie de chauffage (321) du dispositif de chauffage (320) est disposée dans la section de conduit d'air d'aspiration d'air (3122).

12. Four à tremper le verre selon la revendication 8, dans lequel les ports d'aspiration d'air (314) sont disposés sur une surface de paroi latérale de la section de conduit d'air d'aspiration d'air (3122) faisant face à la deuxième extrémité du rouleau d'entraînement (101).

13. Four à tremper le verre selon l'une quelconque des revendications 1 à 12, dans lequel chacune de la section de four de préchauffage (100), de la section de four de chauffage (200) et de la section de four de trempage (300) est divisée en une partie de four supérieure (330) et une partie de four inférieure (340), dans lequel la partie de four supérieure est disposée au-dessus des rouleaux d'entraînement (101), et la partie de four inférieure (340) est disposée au-dessous des rouleaux d'entraînement (101).

14. Four à tremper le verre selon l'une quelconque des revendications 1 à 13, dans lequel le brûleur de milieu poreux comprend un boîtier, le boîtier présente une chambre, une entrée d'air (2112) raccordée à la chambre, et un port de dégagement de chaleur (2113) raccordé à la chambre ;
une zone de pré-mélange (2115), une zone anti-retour de flamme (218), et une zone de combustion (219) sont disposées en séquence dans la chambre le long d'une direction d'entrée d'air allant de l'entrée d'air (2112) vers le port de dégagement de chaleur (2113) ;
dans lequel la zone anti-retour de flamme (218) est remplie d'une couche de matériau d'isolation thermique, une couche de matériau de milieu poreux est disposée dans la zone de combustion (219), et la couche de matériau d'isolation thermique présente un canal de gaz en communication avec la zone de pré-mélange (2115) et la couche de matériau de milieu poreux ;
et une couche intermédiaire de refroidissement (212) prévue pour recevoir un milieu de refroidissement est disposée autour du boîtier, et la couche intermédiaire de refroidissement (212) enveloppe au moins une partie de la zone de pré-mélange (2115), une partie de la zone anti-retour de flamme (218), et une partie de la zone de combustion (219).

15. Four à tremper le verre selon la revendication 14, dans lequel le boîtier comprend un cylindre interne (2114) et une plaque couvercle (2111) présentant l'entrée d'air (2112), la plaque couvercle (2111) recouvre une extrémité du cylindre interne (2114) pour former la chambre, un cylindre externe (2121) est emmanché sur le cylindre interne (2114), et la couche intermédiaire de refroidissement (212) est formée entre le cylindre interne (2114) et le cylindre externe (2121).

16. Four à tremper le verre selon la revendication 14 ou 15, dans lequel la couche intermédiaire de refroidissement (212) présente une entrée de refroidissement (2122) et une sortie de refroidissement (2123) pour le milieu de refroidissement, dans lequel l'entrée de refroidissement (2122) et la sortie de refroidissement (2123) sont adjacentes à l'entrée d'air (2112).

17. Four à tremper le verre selon la revendication 16, comprenant en outre un conduit d'air de support de combustion (2161) en communication avec l'entrée d'air (2112), dans lequel le conduit d'air de support de combustion (2161) est en communication avec l'entrée de refroidissement (2122) via une première branche (2163), le conduit d'air de support de combustion (2161) est en communication avec la sortie de refroidissement (2123) via une deuxième branche (2164), et un point de raccordement entre la deuxième branche (2164) et le conduit d'air de support de combustion (2161) est plus proche de l'entrée d'air (2112) qu'un point de raccordement entre la première branche (2163) et le conduit d'air de support de combustion (2161).

18. Four à tremper le verre selon la revendication 16, comprenant en outre un réservoir d'eau de refroidissement (2171) et un réservoir d'eau chaude (2712), dans lequel le réservoir d'eau de refroidissement (2171) communique avec l'entrée de refroidissement (2122), et le réservoir d'eau chaude (2712) communique avec la sortie de refroidissement (2123).

19. Four à tremper le verre selon la revendication 14, dans lequel le brûleur de milieu poreux est réglé selon au moins l'une des façons suivantes :
une couche de matériau de conservation de chaleur (2152) est disposée autour de la couche intermédiaire de refroidissement (212) ;
une couche de support de matériau d'isolation thermique (2153) pour supporter la couche de matériau d'isolation thermique est disposée dans la chambre et adjacente au port de dégagement de chaleur (2113) et présente un canal de dégagement de chaleur correspondant à la couche de matériau de milieu poreux, dans lequel le canal de dégagement de chaleur communique avec le port de dégagement de chaleur (2113) ;
le four à tremper le verre comprend en outre un panneau d'isolation thermique inférieur (2154) pour supporter le boîtier, dans lequel le panneau d'isolation thermique inférieur (2154) présente un trou de dégagement de chaleur correspondant au port de dégagement de chaleur (2113) ; ou
le four à tremper le verre comprend en outre un thermocouple inséré dans la zone de pré-mélange (2115).

20. Four à tremper le verre selon la revendication 14, dans lequel un rapport de la profondeur sur le diamètre du canal de gaz de la couche de matériau d'isolation thermique est de 30:1 à 80:1.

21. Procédé de trempe de verre, appliqué au four à tremper le verre selon l'une quelconque des revendications 1 à 20, et comprenant :
la pose du verre manuellement ou avec un dispositif automatisé en une seule couche de verre sur une plateforme de pose de matériau pour placer des produits ;
le transfert du verre sur une pluralité de rouleaux d'entraînement (101) vers la section de four de préchauffage (100) et le préchauffage du verre dans la section de four de préchauffage (100) ;
le transfert du verre vers la section de four de chauffage (200) et le chauffage du verre dans la section de four de chauffage (200) à une température de réglage de 600°C à 640°C ; et
le transfert du verre de la section de four de chauffage (200) vers la section de four de trempage (300) et le chauffage du verre et l'homogénéisation d'une température du verre par circulation de gaz en balayage au travers les surfaces supérieure et inférieure du verre.
